# EUROPÄISCHE PATENTSCHRIFT

(11) **EP 2 582 994 B1**
(45) Veröffentlichungstag und Bekanntmachung des Hinweises auf die Patenterteilung: **30.12.2015**
(21) Anmeldenummer: 11724653.8
(22) Anmeldetag: 14.06.2011
(51) Int. Cl.: F16D 65/092, F16D 65/14, F16D 65/56

(54) **SCHEIBENBREMSE IN HYDRAULISCHER SELBSTVERSTÄRKENDER BAUART MIT KRAFTÜBERTRAGUNGSEINHEIT**
DISC BRAKE OF HYDRAULIC SELF-ENERGIZING DESIGN WITH FORCE TRANSMISSION UNIT
FREIN À DISQUE DU TYPE À AUTO-AMPLIFICATION HYDRAULIQUE PRÉSENTANT UNE UNITÉ DE TRANSFERT DE FORCE

(30) Priorität: 17.06.2010 DE 102010024075
(43) Veröffentlichungstag der Anmeldung: 24.04.2013
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(74) Vertreter: Mattusch, Gundula
(86) Internationale Anmeldenummer: PCT/EP2011/059818
(87) Internationale Veröffentlichungsnummer: WO 2011/157694

(56) Entgegenhaltungen:
- WO-A1-2007/045430
- DE-A1-102006 057 442
- DE-B3-102008 061 347

## Beschreibung

Die Erfindung betrifft eine Scheibenbremse in hydraulischer selbstverstärkender Bauart mit einer Kraftübertragungseinheit.

Eine Scheibenbremse mit elektromotorischem Aktuator in selbstverstärkender Bauart und bremseninterner Hydraulikanordnung ist in der Anmeldeschrift WO 2007/045430 A1 und DE-A-10 2006 057442 der Anmelderin beschrieben.

Eine derartige Scheibenbremse ist mit einem erheblichen Teileaufwand und entsprechenden Kosten verbunden.

Die Aufgabe der vorliegenden Erfindung besteht darin, eine gattungsgemäße Scheibenbremse zu verbessern.

Damit kann eine Scheibenbremse realisiert werden, welche den Aufbau einer kompakten Scheibenbremse mit geringerer Teilezahl als im Stand der Technik ermöglicht. Erfindungsgemäß wird diese Aufgabe mit den Merkmalen des Anspruchs 1 gelöst.

Die Scheibenbremse ist mit zumindest einer Kraftübertragungseinheit ausgerüstet, die einen Umlenkhebel und ein daran angebrachtes Schulterelement aufweist. Der Umlenkhebel und das Schulterelement weisen Abrollflächen auf, die in Kontakt mit jeweiligen korrespondierenden Abrollflächen eines Zuspannelementes des zumindest einen Zuspannzylinders und einer Auflagereinrichtung des Bremsbelags stehen, und wobei der Umlenkhebel einen Druckabschnitt mit einer Abrollfläche aufweist, die in Wirkungsverbindung mit dem zumindest einen Tangentialkraftaufnahmezylinder steht.

So ist in einfacher Weise eine Scheibenbremse mit einer Kraftübertragungseinheit geschaffen, welche ein Element zur Übertragung von Zuspannkräften und ein Element zur Übertragung von Tangentialkräften aufweist, wobei durch die Ausgestaltung von in Kontakt stehenden Abrollflächen Reibungsverluste reduziert sind und die Robustheit erhöht wird.

Eine Scheibenbremse in selbstverstärkender Bauart umfasst Folgendes: eine bremseninterne Hydraulikanordnung mit einem Vorratskreis und einem Ausdehnungsgefäß; eine Zuspannvorrichtung mit zumindest einem Zuspannzylinder zum Zuspannen zumindest eines Bremsbelages in Richtung einer Bremsscheibe; zumindest eine Kraftübertragungseinheit, welche den zumindest einen Bremsbelag unter einem Keilwinkel an der Zuspannvorrichtung abstützt; zumindest einen Tangentialkraftaufnahmezylinder zur Keilwinkelumschaltung, der mit der zumindest einen Kraftübertragungseinheit in Wirkungsverbindung steht; einen elektromotorischen Aktuator, welcher auf die Zuspannvorrichtung über die Hydraulikanordnung einwirkt; und eine Steuereinheit, welche zur Steuerung der Keilwinkelumschaltung zwischen dem Tangentialkraftaufnahmezylinder und dem elektromotorischen Aktuator vorgesehen ist, und ist dadurch gekennzeichnet, dass die zumindest eine Kraftübertragungseinheit einen Umlenkhebel und ein daran angebrachtes Schulterelement aufweist, wobei der Umlenkhebel und das Schulterelement Abrollflächen aufweisen, die in Kontakt mit jeweiligen korrespondierenden Abrollflächen eines Zuspannelementes des zumindest einen Zuspannzylinders und einer Auflagereinrichtung des Bremsbelags stehen, und wobei der Umlenkhebel einen Druckabschnitt mit einer Abrollfläche aufweist, die in Wirkungsverbindung mit dem zumindest einen Tangentialkraftaufnahmezylinder steht.

Bei zwei und mehr Zuspannzylindern kann ein Verteilerzylinder zur Druckverstärkung zwischen dem elektromotorischen Aktuator und der Zuspannvorrichtung in Reihe angeordnet sein. Dieser bietet auch den Vorteil, einen Schrägverschleiß der Bremsbeläge auszugleichen und ein Druckniveau zwischen dem Tangentialaufnahmezylinder und dem Verteilerzylinder zu senken.

Eine besonders große Reduzierung von Reibung der in Zusammenwirkung stehenden Funktionseinheiten wird dadurch erzielt, dass der Umlenkhebel einen Zahnabschnitt aufweist, welcher zur Zusammenwirkung mit einem Zahngegenstück des Zuspannelementes vorgesehen ist. Die Zahnkontur ist so gewählt, dass sich diese Verzahnung auf beiden Seiten wie zwei ineinander laufende Zahnräder verhält. Das bedeutet, dass die gleichen reibungsarmen Vorgänge wie beim Abwälzen von Zahnflanken aufeinander auftreten.

Das Zahngegenstück kann ein separates Bauteil zum Anbringen an das zumindest eine Zuspannelement sein. Dadurch ist eine Bearbeitung zur Erstellung der Verzahnung separat auf einer entsprechenden Maschine möglich.

Auch die Auflagereinrichtung kann mit einem Abschnitt ausgebildet sein, der zum Beispiel als Zahn hergestellt ist. Zwischen diesem und einem Kraftüberleitungsabschnitt des Hebels und einer damit verbundene Schulter kann ein Rollenelement angeordnet sein, welches auf der Oberfläche abrollt.

Es ist bevorzugt, dass die Schulter des Umlenkhebels eine ebene Oberfläche aufweist und der Auflagerabschnitt der Auflagereinrichtung, insbesondere in einer Ausbildung als Zahn, eine gekrümmte Oberfläche besitzt. Aber auch Kombinationen sind möglich: Die Schulter des Umlenkhebels kann eine ebene oder gekrümmte Oberfläche aufweisen, wobei der Auflagerabschnitt der Auflagereinrichtung ebenfalls eine gekrümmte oder ebene Oberfläche besitzt.

Die Krümmungen dieser Oberflächen können so berechnet sein, dass sie exakt harmonisch mit Abrollbewegungen auf der Auflagereinrichtung übereinstimmt.

Ein Wälzpunkt, in dem ein gleitfreies Abwälzen erfolgt, zwischen der zumindest einen Kraftübertraglingseinheit, dem zumindest einen Zuspannzylinder und der Auflagereinrichtung des Bremsbelags kann so gewählt sein, dass er bei einem Drittel einer tangentialen Maximalauslenkiing des Bremsbelags liegt. Somit ergibt sich bei einem Drittel der Maximalauslenkung keine Relativverschiebung, zum Beispiel zwischen Zahn und Gegenkontur. Das ist vorteilhaft, da bei einem Drittel der Maximalauslenkung, das heißt bei einem Drittel einer maximalen Zuspannkraft, in der Häufigkeitsverteilung von Bremszustellungen die größte Zahl von Bremsbetätigungen auftritt, während eine maximale Zuspannkraft relativ selten vorkommt.

Ein solcher Wälzpunkt kann natürlich auch in der Ausführung vorhanden sein, in welcher der Umlenkhebel den Zahnabschnitt aufweist, der zur Zusammenwirkung mit dem Zahngegenstück des Zuspannelementes vorgesehen ist.

Das Schulterelement ist mit dem Umlenkhebel über eine federnde Tellerfederverschraubung verbunden.

Dadurch wird gewährleistet, dass auch bei aufgeweiteten Fertigungstoleranzen kein Rutschen mit erhöhter Reibung während eines Abrollens vorkommt.

Das Schulterelement kann zur Zusammenwirkung mit dem zumindest einen Zuspannzylinder und der Auflagereinrichtung des Bremsbelags Abschnitte zur Zuspannkraftübertragung aufweisen. Diese Abschnitte können mit Abrollflächen versehen sein, wodurch eine Reibung reduziert ist. Außerdem ist dadurch eine Kraftaufteilung ermöglicht, wobei das Schulterelement vorzugsweise Zuspannkräfte und der Umlenkhebel Tangentialkräfte übertragen.

In einer Ausführung kann das Schulterelement eine Einschnürung zur Bildung einer geringfügigen Elastizität aufweisen. Hierdurch wird ein Abrollen ohne Rutschen ermöglicht.

Das Schulterelement besitzt gegenüber dem Umlenkhebel eine Bewegungsfreiheit, welche vorteilhaft gleichzeitig eine rutschfreie Abrollbewegung der vertikalen Zuspannkraft mittels des Schulterelementes und der horizontalen Bremskraft mittels des Rollenelementes ermöglicht.

Die Scheibenbremse kann außerdem eine Nachstelleinrichtung zur Nachstellung eines Bremsbelagverschleißes umfassen, wobei die Nachstelleinrichtung eine verstellbare Schraubspindel, die in Wirkverbindung mit der Zuspannvorrichtung zur Nachführung des zumindest einen Bremsbelages steht und mit dem elektromotorischen Aktuator zum Antrieb koppelbar ist, und einen Nachstellkolben aufweist, der in dem Tangentialkraftaufnahmezylinder bei Nachführung des zumindest einen Bremsbelages hydraulisch verstellbar ist.

In einer weiteren Ausführung, die auch Gegenstand einer separaten Anmeldung sein kann, ist vorgesehen, dass die Steuereinheit mit dem Vorratskreis und mit einem Zwischenkreis verbunden ist, wobei der elektromotorischen Aktuator über ein Ansaugventil mit dem Vorratskreis verbunden ist, und über ein Umschaltventil in einer ersten Stellung mit dem Zwischenkreis verbindbar ist.

Dabei ist es möglich, dass in der ersten Stellung des Umschaltventils eine Änderung einer Bremszustellung nur durch Verstellen des elektromotorischen Aktuators durchführbar ist. Die Steuereinheit kann in Zusammenwirkung mit einem Aufnahmeestufenkolben des Tangentialkraftaufnahmezylinders zur Auswahl eines einem momentanen Reibwert des Bremsbelags am nächsten liegenden wirksamen Keilwinkels ausgebildet sein.

Ein besonderer Vorteil dabei ist, dass die Bremskraft nur durch eine Verstellung einer Steuerscheibe, die zum Beispiel als Lochscheibe ausgebildet sein kann, erhöht oder verringert werden kann. Dabei kann diese Steuerscheibe mit dem Aufnahmeestufenkolben des Tangentialkraftaufnahmezylinders in Verbindung stehende Druckkammern mit dem Vorratskeis und/oder dem Zwischenkreis wahlweise verbinden.

Eine besondere Abstufung von Keilwinkeln ist dadurch ermöglicht, dass die wahlweise Verbindung der Druckkammern mit dem Vorratskeis und/oder dem Zwischenkreis nach dem Wirkprinzip einer binären Codierung in sieben Stufen mit steigender wirksamer Kolbenfläche des Aufnahmestufenkolbens schaltbar ist.

Der elektromotorische Aktuator kann über das Umschaltventil in einer zweiten Stellung mit dem hydraulischen Steuerantrieb der Steuereinheit verbindbar ist, um die wahlweisen Verbindungen zum Zweck der Wahl eines flacheren oder steileren Keilwinkels zu schalten. Dabei erfüllt er eine zusätzliche Funktion und spart Raum ein. Beim Umschalten kann z.B. eine Pumpensaugleitung des Aktuators mit einer Pumpendruckleitung blockiert sein. Dann ist während des kurzen Umschaltenvorgangs keine Änderung einer Bremszustellposition möglich.

In vorteilhafter Weise kann außerdem vorgesehen sein, dass zur Stromeinsparung bei längerem gleichmäßigen Bremsen trotz eines bestehenden Differenzdrucks am elektromotorischen Aktuator dessen Elektromotor stromlos geschaltet werden kann, indem das Umschaltventil aus der ersten Stellung in die zweite Stellung umgeschaltet ist

Damit eine momentan gewählte Bremszustellposition unverändert bleibt, kann die Steuereinheit weitere Schaltstellungen aufweisen, so dass zwischen jeder der wahlweisen Verbindungen bzw. jedem der möglichen schaltbaren Keilwinkel eine Sperrstellung existiert, in welcher die Druckkammern und Verbindungen zu dem Vorratskeis und/oder dem Zwischenkreis abgesperrt sind.

Während der gesamten Dauer einer Bremsung steht der elektromotorische Antrieb nur mit dem Steuerantrieb der Steuereinheit in Wirkverbindung.

In einer weiteren Ausführung kann vorgesehen sein, dass während konstanter Bremszustellposition die Loch- oder Steuerscheibe in einer Sperrstellung steht, welche sich zwischen einem gegenüber aktuellem Keilwinkel mehr überkritischen und einem mehr unterkritischen Keilwinkel befindet, und dass in dieser Stellung der elektromotorische Aktuator stromlos ist.

Bei einem Wunsch nach einer etwas stärkeren Bremszustellung kann mittels des elektromotorischen Aktuators und des Steuerantriebs die Loch- bzw. Steuerscheibe derart verstellbar sein, dass diese Loch- bzw. Steuerscheibe in Wirkweise eines Proportionalventils aus der Sperrstellung langsam in Richtung der Stellung eines überkritischen Keilwinkels verstellt wird. Bei einem gegenteiligen Wunsch wird diese Loch- bzw. Steuerscheibe in ähnlicher Weise aus der Sperrstellung langsam in Richtung der Stellung eines unterkritischen Keilwinkels verstellt.

Außerdem kann die bremseninternen Hydraulikanordnung zum Zweck eines schnellen Lösens der Bremse, zum Beispiel im Falle eines Fehlers oder bei fehlender Versorgungsspannung der Bremse, ein stromlos durchschaltendes Löseventil für ein sofortiges und zuverlässiges Lösen der Bremse aufweisen.

Nachfolgend wird die Erfindung anhand der in den schematischen Figuren der Zeichnung angegebenen Ausführungsbeispiele näher erläutert. Es zeigt dabei:
- Fig. 1: eine schematische Darstellung eines ersten Ausfühningsbeispiels einer erfindungsgemäßen Scheibenbremse;
- Fig. 2: eine schematische Teilschnittdarstellung eines zweiten Ausführungsbeispiels der erfindungsgemäßen Scheibenbremse in einer Normalstellung;
- Fig. 3: eine schematische Teilschnittdarstellung des zweiten Ausführungsbeispiels nach Fig. 2 in einer maximalen Bremszustellung;
- Fig. 4: eine schematische Teilschnittdarstellung des zweiten Ausführungsbeispiels nach Fig. 2 in einer Normalstellung mit maximalem Verschleiß;
- Fig. 5: eine schematische Perspektivansicht des zweiten Ausführungsbeispiels nach Fig. 2;
- Fig. 6: eine schematische Perspektivansicht eines Ausschnitts aus Fig. 5;
- Fig. 7: eine schematische Seitenansicht eines Ausführungsbeispiels einer erfindungsgemäßen Kraftübertragungseinheit;
- Fig. 8: eine schematische Längsschnittansicht der erfindungsgemäßen Kraftübertragungseinheit nach Fig. 7;
- Fig. 9: eine schematische perspektivische Ansicht eines Bremsbelags mit der erfindungsgemäßen Kraftübertragungseinheit; und
- Fig. 10: eine weitere perspektivische Ansicht eines Bremsbelags mit zwei erfindungsgemäßen Kraftübertragungseinheiten und einem Nachstellkolben.

Bauteile mit gleicher oder ähnlicher Funktion sind mit gleichen Bezugszeichen versehen, sofern nicht anders angegeben.

Mit dem Begriff "Öl" ist hier Hydraulikflüssigkeit gemeint.

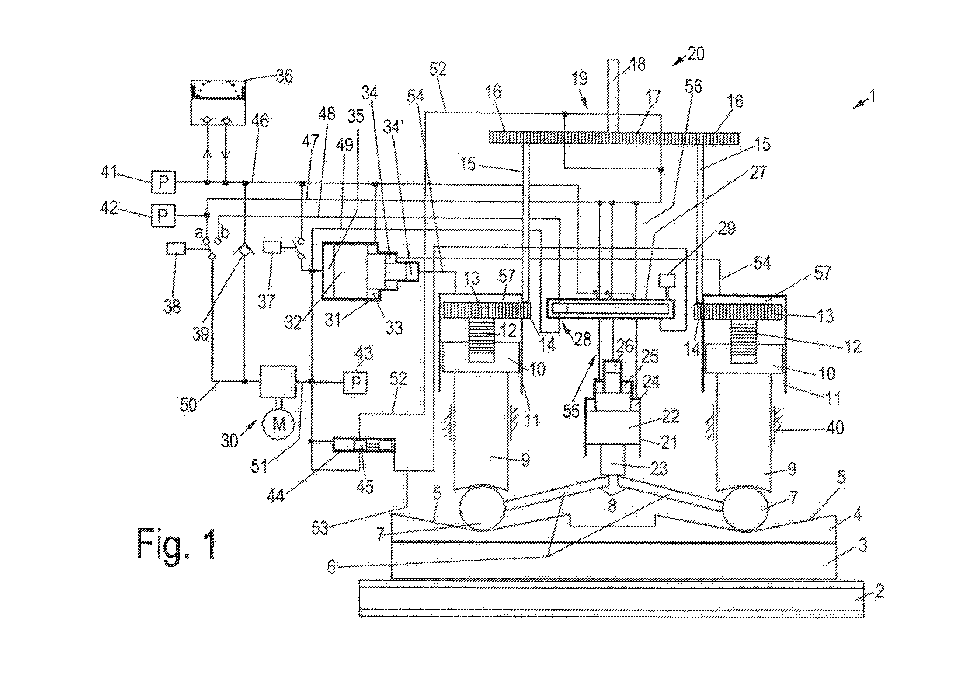

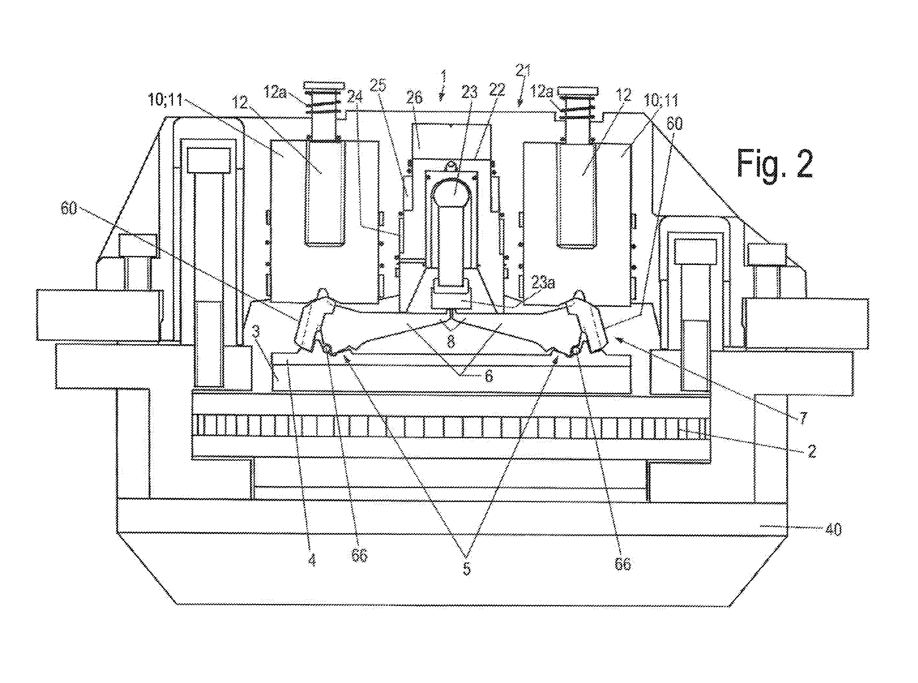

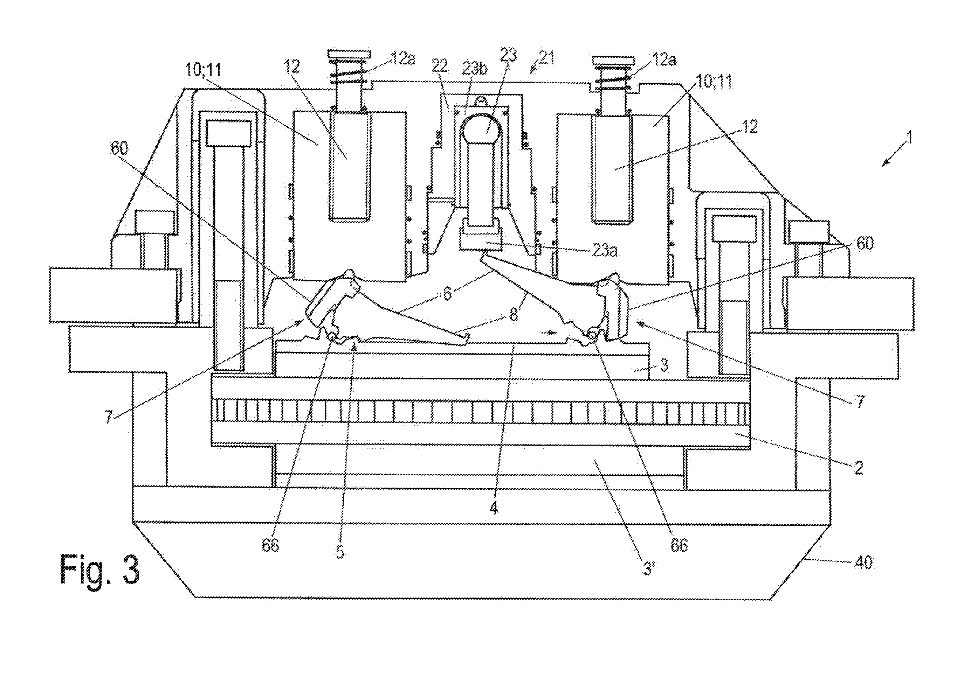

Fig. 1 ist eine schematische Darstellung eines ersten Ausführungsbeispiels einer erfindungsgemäßen Scheibenbremse 1. Fig. 1 wird im Zusammenhang mit Fig. 2 und Fig. 3 beschrieben. Fig. 2 zeigt eine schematische Teilschnittdarstellung eines zweiten Ausführungsbeispiels der erfindungsgemäßen Scheibenbremse in einer Normalstellung; und Fig. 3 illustriert eine schematische Teilschnittdarstellung des zweiten Ausführungsbeispiels nach Fig. 2 in einer maximalen Bremszustellung.

Die Scheibenbremse 1 weist einen Bremssattel 40 auf, welcher eine Bremsscheibe 2 übergreift. Beiderseits der Bremsscheibe 2 ist jeweils ein Bremsbelag 3, 3' mit Bremsbelagträger 4 angeordnet, wobei der in Fig. 2 unten gezeigte Bremsbelag 3' (nicht in Fig. 1 dargestellt) am Bremssattel 40 anliegt und der andere Bremsbelag 3 mit einer Zuspannvorrichtung in Wirkverbindung steht. Die Achse der Bremsscheibe 2 ist nicht gezeigt und verläuft, wie leicht vorstellbar ist, vertikal nach oben unterhalb der Bildebene. Eine Vorwärtsbewegung eines Fahrzeugs, welchem die Scheibenbremse 1 zugeordnet ist, soll in den Fig. 1 bis 3 nach links verlaufen, wobei sich die Bremsscheibe 2 dann nach links dreht.

Der Belagträger 4 ist hier mit zwei keilförmigen Auflagereinrichtungen 5 ausgebildet, wobei sie unter einem Keilwinkel an der Zuspannvorrichtung abgestützt sind, mit welcher sie jeweils über eine Kraftübertragungseinheit 7 mit jeweils einem Zuspannelement 9 in Wirkverbindung stehen. Die Zuspannelemente 9 sind an ihrem oberen Ende jeweils mit einem Zuspannkolben 10 eines Zuspannzylinders 11 verbunden. Die Zuspannzylinder 11 sind so nebeneinander angeordnet, dass eine gleichmäßige Anpressung der Bremsbeläge 3, 3' an die Bremsscheibe 2 beim Zuspannen erfolgen kann.

In die Zuspannkolben 10 ist jeweils in Längsrichtung eine Schraubspindel 12 mit Gewinde eingeschraubt. Die Schraubspindeln 12 sind an ihren oberen Enden jeweils mit einem Schraubspindelrad 13 versehen, wobei jedes Schraubspindelrad 13 mit einem Nachstellritzel 14 in Eingriff steht. Die Nachstellritzel 14 sind jeweils über Nachstellwellen 15 mit Nachstellwellenrädern 16 drehfest verbunden, welche gemeinsam mit einem Nachstellantriebsrad 17 in Eingriff sind. Das Nachstellwellenrad 16 und das Nachstellantriebsrad 17 sind zum Beispiel als hydraulisch betriebener Zahnradmotor 19 ausgebildet und hier mit einer Notlöseeinrichtung 18 ausgerüstet, welche zur Betätigung des Nachstellantriebsrads 17 zum Beispiel mittels eines Werkzeugs verstellbar ist. Die Nachstellräder 13, 14, 16 und 17 weisen zum Beispiel Verzahnungen auf und werden zur Verschleißnachstellung der Bremsbeläge 3, 3' verwendet, was weiter unten noch näher erläutert wird. Die Nachstellräder 13, 14, 16 und 17, die Notlöseeinrichtung 18, die Nachstellwellen 15 und der Zahnradmotor 19 bilden zusammen mit den Schraubspindeln 12 eine Nachstelleinrichtung 20 der Scheibenbremse 1. Alternativ kann die Nachstellwelle 15 mit der jeweiligen Schraubspindel 12 identisch sein, so dass die Zahnräder Schraubspindelrad 13 und Nachstellritzel 14 entfallen, wobei die beiden Nachstellantriebsräder Nachstellwellenrad 16 und Nachstellantriebsrad 17 einen etwas größeren Außendurchmesser aufweisen, während gleichzeitig das Nachstellantriebsrad 17 einen kleinen Außendurchmesser besitzt.

Rückholfedern 12a sind jeweils zwischen Bremssattel 40 und Schraubspindeln 12 in Längsrichtung der Schraubspindeln 12 angeordnet und ziehen den Bremsbelag 3, 3' von der Bremsscheibe 2 in der in Fig. 2 gezeigte Normalstellung auf ein bestimmtes so genanntes Lüftspiel zurück. Weitere Federn (nicht dargestellt) sind zum Zusammenhalten von Zuspannkolben 10 und Bremsbelag 3 vorgesehen.

Die Kraftübertragungseinheiten 7 weisen jeweils einen Umlenkhebel 6 auf, wobei sich die Umlenkhebel 6 gegenüberstehen und Druckabschnitte 8 mit einem Stößel 23 eines Tangentialkraftaufnahmezylinders 21 in Wirkverbindung stehen. Der Stößel 23 ist hier Teil eines Aufnahmestufenkolbens 22, der mit dem Tangentialkraftaufnahmezylinder 21 erste bis dritte Druckkammern 24, 25 und 26 festlegt. In bevorzugter Ausführung (Fig. 2...4) umfassen die Kraftübertragungseinheiten 7 jeweils ein Schulterelement 60 und ein Rollenelement 66. Diese werden weiter unten noch ausführlich beschrieben und erläutert.

Die Druckkammern 24, 25 und 26 sind jeweils über Zwischenleitungen 55 an eine Steuereinheit 27 angeschlossen, welche Bestandteil eines Hydrauliksystems der Scheibenbremse 1 ist. Dieses Hydrauliksystem wird nun anhand der Fig. 1 näher erläutert.

Ein elektromotorischer Aktuator 30, zum Beispiel ein Elektromotor mit einer Zahnradpumpe, ist über eine Pumpensaugleitung 50 mit einem Ansaugventil 39, zum Beispiel ein Richtungsventil, an einen Vorratskreis 46 angeschlossen. Der Vorratskreis 46 steht einerseits mit einem Ausdehnungsgefäß 36 und einem ersten Drucksensor 41 in hydraulischer Verbindung. Andererseits ist der Vorratskreis 46 über ein Löseventil 37 mit einer Pumpendnickleitung 51 des elektromotorischen Aktuators 30 verbindbar. Weiterhin ist der Vorratskreis 46 an die Steuereinheit 27 und eine Vordruckkammer 33 eines Verteilerzylinders 31 angeschlossen.

Der Vorratskreis 46 ist zum Beispiel mit einem Vorratsdruck von ca. 1 bis 4 bar beaufschlagt.

Der elektromotorische Aktuator 30 steht außerdem über die Pumpendruckleitung 51 mit einer Eingangsdruckkammer 35 des Verteilerzylinders 31 und einem Hydraulikschalter 44 in Verbindung. An die Pumpendruckleitung 51 schließt sich ferner eine Steuerantriebsdruckleitung 49 an, welche zu einem Steuerantrieb 28 der Steuereinheit 27 führt. Eine Steuerantriebsrückleitung 48 ist zwischen dem Steuerantrieb 28 und einer zweiten Stellung b eines Umschaltventils 38 angeschlossen. Eine hier geschlossene, d.h. erste Stellung a des Umschaltventils 38 verbindet die Pumpenansaugleitung 50 mit einem Zwischenkreis 47, welcher an der Steuereinheit 27 über Verbindungsleitungen 56 angeschlossen ist. Ferner ist der Zwischenkreis 47 mit dem Zahnradmotor 19 der Nachstelleinrichtung 20 verbunden, wobei eine Zahnradmotordruckleitung 52 den Zahnradmotor 19 druckseitig mit dem Hydraulikschalter 44 verbindet. Der Hydraulikschalter 44 ist außerdem über eine Hydraulikschalter-Steuerleitung 53 mit der Steuereinheit 27 verbunden.

Die Steuereinheit 27 ist zum Beispiel eine tellerförmige verdrehbare Steuerscheibe mit Steuerbohrungen, welche unterschiedliche Funktionen der Scheibenbremse 1 in unterschiedlichen Betriebszuständen übernehmen und Steueraufgaben ausführen. Diese Steuerscheibe ist zum Beispiel mit einem hydraulischen Zahnradmotor als Steuerantrieb 28 gekoppelt. Die Steuerscheibe steht außerdem mit einem Steuermelder 29 in Wirkverbindung, welcher die Drehwinkelposition der Steuerscheibe sensiert und an ein Steuergerät meldet. Ein übergeordnetes, z. B. elektronisches Bremssteuergerät (nicht gezeigt) steuert und regelt die Bremsvorgänge und -zustände der Scheibenbremse 1. Dazu steuert es die Ventile 37 und 38, welche z. B. Elektromagnetventile sind, und den elektromotorischen Aktuator 30. Das Steuergerät kommuniziert auch mit dem ersten Drucksensor 41 sowie mit weiteren Drucksensoren, von denen ein zweiter Drucksensor 42 einen Druck im Zwischenkreis 46 ermittelt. Ein dritter Drucksensor 43 dient zur Druckermittlung eines Drucks in der Pumpendnickleitung 51, wobei dieser Druck in den Sensoren 42, 43 bis zu 130 bar betragen kann.

Die Steuerscheibe kann in einer Ausführungsart acht Schaltstellungen besitzen um eine Auswahl von sieben unterschiedlichen Keilwinkeln zu ermöglichen.

In einer zweiten Ausführungsart befindet sich zwischen jeder der acht Schaltstellungen eine Stellung, in welcher alle Verbindungsleitungen 55 des Aufnahmestufenkolbens 22 abgesperrt sind. Damit ist eine Ansteuerung der Bremskraft allein mittels einer Umschaltung zwischen über- bzw. unterkritischem Keilwinkel möglich. Durch die Möglichkeit einer porportionalen Verstellung der Schaltquerschnitte sowie einer Sperrstellung zwischen jedem der acht Schaltstellungen, ist es möglich, nur durch Verdrehen der Steuerscheibe die Bremskraft zu erhöhen bzw. zu verringern.

Der Verteilerzylinder 31 weist einen Stufenkolben 32 zur Druckverstärkung, Synchronisation und gleichmäßigen Beaufschlagung der Zuspannzylinder 11 mit einem Zuspanndruck von bis ca. 350 bar auf. Dazu bildet der Stufenkolben 32 mit dem Zuspannzylinder 11 Hockdruckkammern 34, 34', welche jeweils über eine Hochdruckleitung 54 mit den Zuspannzylindern 11 in Verbindung stehen.

In Ausgangsstellung des Kolbens (linker Anschlag) sind beide Druckkammern 34, 34' mit der Vordruckkammer verbunden, indem der Stufenkolben 32 gegenüber dem Zylinderraum 31 etwas verkürzt ausgeführt ist. Dadurch können die beiden Zuspannkolben 10 in ihrer Ruheposition (auf Anschlag zurückgezogen) hydraulisch neu abgeglichen werden. Gleichzeitig dient dies der Rückführung von überschüssigem Öl aus den Zuspannzylindern 11 in das Ausdehnungsgefäß 36, bei einem Belagwechsel, wenn die Zuspannkolben 10 wieder ganz zurückgefahren werden.

Das Ausdehnungsgefäß 36 kann als eine Art Wechselkartusche ähnlich jetzigen marktüblichen Ölfiltern in Kraftfahrzeugmotoren ausgeführt sein. Damit kann ein schneller Wechsel des Hydrauliköls vorgenommen werden.

Da in jedem Hydrauliksystem das Ausfiltern von Schmutzpartikeln von großer Bedeutung für die Haltbarkeit des Öls ist, kann das kartuschenartige Ausgleichsgefäß mit einem Ölfilter ausgestattet sein. Hierzu ist es dienlich, dass die Verbindungsleitung zum Ausdehnungsgefäß aus zwei einzelnen Leitungen besteht, welche jeweils mit einem Durchflußrichtungsventil ausgestattet sind. Durch antiparallele Flussrichtung dieser beiden Rückflussverhinderer kann erzwungen werden, dass mit jeder Volumenänderung des Ausdehnungsgefäßes jegliches ein- und/oder ausfließende Öl durch diesen Ölfilter geleitet wird. Mit dem Wechseln des kartuschenartigen Ausdehnungsgefäßes kann auch der Ölfilter mitgewechselt werden.

Die Scheibenbremse 1 ist eine hydraulische selbstverstärkende Scheibenbremse, deren Funktion nun erläutert wird.

Bei einem Bremsbeginn wird mittels des elektromotorischen Aktuators 30 über das Ansaugventil 39 Hydraulikflüssigkeit aus dem Vorratskreis 46 und dem Ausdehnungsgefäß 36 angesaugt. Dabei erhöht der elektromotorische Aktuator 30 den Druck in der Pumpendruckleitung 51, wodurch der Stufenkolben 32 des Verteilerzylinders 31 verstellt wird und die Zuspannzylinder 11 mit Druck beaufschlagt. Somit werden die Bremsbeläge 3, 3' durch die Zuspannelemente 9 über die Kraftübertragungseinheiten 7 gegen die Bremsscheibe 2 gedrückt, bis ein Selbstverstärkungsprozess eingeleitet ist.

Dabei verschiebt sich der Bremsbelag 3 aufgrund von Reibung in Fig. 3 nach links gegen einen Anschlag des Bremssattels 40. Durch diese horizontale bzw. tangentiale Auslenkung des Bremsbelags 3 infolge überkritischen mechanischen Keilwinkels der Auflagereinrichtung 5 bewegt sich einer der beiden Umlenkhebel 6 nach oben. Die linke Kraftübertragungseinheit 7 als Umlenkhebel 6 wird nach unten und die rechte Kraftübertragungseinheit 7 als weiterer Umlenkhebel 6 nach oben geschwenkt. Die Umlenkhebel 6 werden durch die so erzeugte Tangentialkraft verschwenkt. Der rechte Umlenkhebel 6 lenkt die Tangentialkraft in eine Vertikalkraft um, welche über seinen Druckabschnitt 8 auf den Stößel 23 des Tangentialkraftaufnahmezylinders 21 übertragen wird. Dabei dient eine Druckplatte 23a zur reibungsfreien Kraftübertragung, indem die Oberkante des Umlenkhebels 6 in einer Linienberührung auf der Unterseite der Druckplatte 23a abrollt. Gleichzeitig rollt die Druckplatte 23a an deren Oberseite ebenfalls in einer um horizontal ca. 90° versetzten Linienberührung, gegenüber dem Stößel ab. Damit kann der während einer Bremsung sich horizontal räumlich bewegende Bremsbelag reibungsfrei seine Vertikalkraft auf den Aufnahmestufenkolben übertragen.

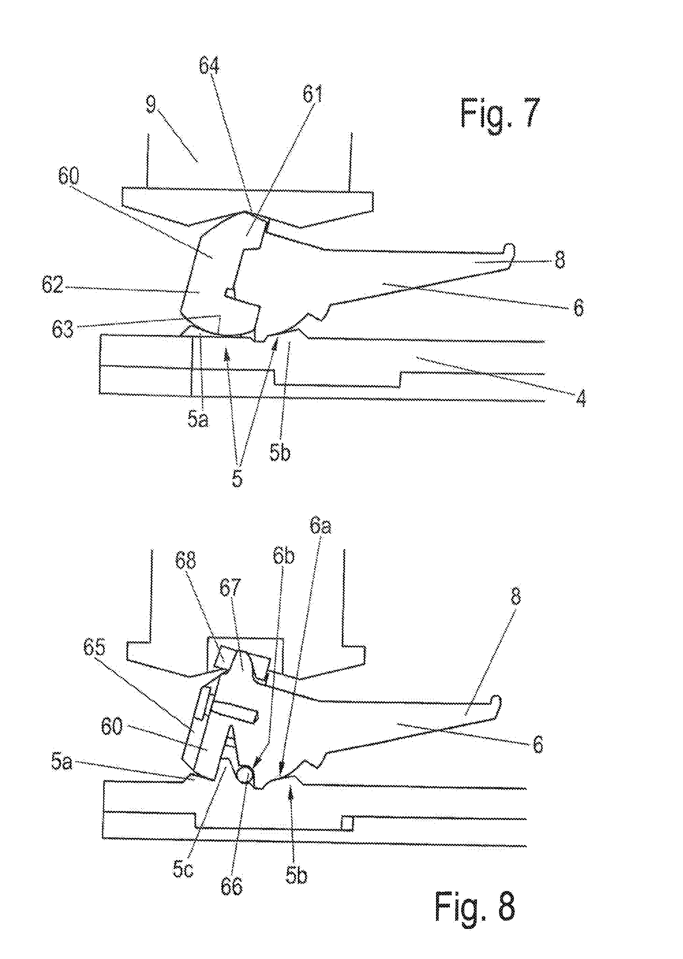

Die Bremskräfte werden über die beiden Kraftübertragungseinheiten 7 übertragen. Auf der rechten Seite werden diese über die Zuspannzylinder 11 in den Bremssattel 40 eingeleitet. Auf der linken Seite überträgt der Umlenkhebel 6 mit seinem zwischen dem Zuspannelement 9 und der Auflagereinrichtung 5 angeordneten Abschnitt die Zuspannkraft des linken Zuspannzylinders 11, sowie durch seine parallel, jedoch schräg verlaufenden Abrollflächen 5 auch einen Teil der Bremskräfte. Auf der rechten Seite übernimmt die Übertragung der Zuspannkraft des rechten Zuspannzylinders 11 ein Schulterelement 60 der rechten Kraftübertragungseinheit 7. Fährt das nicht gezeigte Fahrzeug rückwärts, kehrt sich der oben beschrieben Vorgang um, wie leicht zu verstehen ist, und der linke Umlenkhebel 6 überträgt die Tangentialkraft auf den Tangentialkraftaufnahmezylinder 21. Eine ausführliche Beschreibung der Kraftübertragung von Zuspannkräften und Tangentialkräften durch die Kraftübertragungseinheiten erfolgt weiter unten im Zusammenhang mit den Figuren 7 bis 10.

Die Steuerscheibe der Steuereinheit 27 wird dabei über den Steuerantrieb 28 so eingestellt, dass die Druckkammern 24, 25 und 26 des Tangentialkraftaufnahmezylinders 21 in sieben unterschiedlichen Kombinationen entweder mit dem Vorratskreis 46 und/oder mit dem Zwischenkreis 47, welcher über das Umschaltventil 38 mit der Pumpenansaugleitung 50 verbunden ist, verbindbar sind. Damit kann die Scheibenbremse 1 an einen momentanen Reibwert angepasst werden. Verschiedene, so genannte Keilwinkel, sind einstellbar, indem die wirksamen Flächen der drei Druckkammern 24, 25, 26 vorzugsweise im Verhältnis 2:1 und (damit 1/7, 2/7, 4,7) ausgebildet sind. Durch binäres Kombinieren der aktiven Flächen lassen sich sieben unterschiedlich große Wirkflächen dieses Stufenkolbens 22 herstellen. Messwerte zur Ermittlung des momentanen Reibwertes liefern die Drucksensoren 42, 43 unter Berücksichtigung der jeweils wirksamen Druckkammern 24, 25, 26 und weitere Parameter, z. B. aus einer Fahrzeugsteuerung. Der Tangentialkraftaufnahmezylinder 21 liefert somit einen Druck, der zur Verstärkung des Drucks in der Pumpendruckleitung 51 über den Verteilerzylinder 31 auf die Zuspannzylinder 11 wirkt und damit die Pumpenleistung des elektromotorischen Aktuators 30 minimiert. Der Verteilerzylinder 31 kann zusammen mit den beiden Zuspannzylindern 11 deren Zustellbewegung synchronisieren, einen Schrägverschleiß der Bremsbeläge 3, 3' ausgleichen und ein Druckniveau zwischen dem Tangentialaufnahmezylinder 21 und dem Verteilerzylinder 31 im Zwischenkreis 47 senken. Dabei dient der Verteilerzylinder 31 als Druckverstärker für die Zuspannzylinder 11.

Am Ende des Bremsvorgangs wird der elektromotorische Aktuator 30 ausgeschaltet und das Löseventil 37 eingeschaltet. Dadurch wird der Druck in der Pumpendruckleitung 51 abgebaut, wobei die Rückholfedern 12a bei nachlassendem Zuspanndruck in den Zuspannzylindern 11 den Bremsbelag 3 wieder in seine Normalstellung mit Lüftspiel zurückführen.

Das Löseventil 37 kann auch als Notlöseventil im Fehlerfall zur Lösung der Scheibenbremse 1 verwendet werden. Es ist zum Beispiel ein Magnetventil, welches stromlos offen ist.

Das Ausdehnungsgefäß 36 dient außerdem zur Aufnahme der Volumina der mit dem Vorratskreis 46 über die Steuereinheit 27 verbundenen Druckkammern 24, 25, 26 des Tangentialkraftaufnahmezylinders 21. Das Ausdehnungsgefäß 36 besitzt ferner Sensoren zur Ermittlung der jeweils aktuellen Ölmenge. Damit besitzt es Geber zur Erfassung eines Belagverschleißes der Bremsbeläge 3, 3', der aktuellen Horizontalverschiebung des Bremsbelags 3 infolge Bremsens sowie eines Hydraulikflüssigkeitsverlustes.

Bei einem so erfassten Verschleiß wird bei einem bestimmten Verschleißwert vom Bremssteuergerät das Umschaltventil 38 in Stellung b umgeschaltet und der elektromotorische Aktuator 30 eingeschaltet. Dabei ist die Steuerantriebsrückleitung 48 mit der Pumpensaugleitung 50 verbunden und der hydraulische Zahnradmotor 28 der Steuereinheit 27 verstellt die Steuerscheibe derart, dass über die Hydraulikschalter-Steuerleitung 53 ein Schieber 45 des Hydraulikschalters 44, zum Beispiel durch den an ihm anstehenden Druck der mit ihm verbundenen Pumpendruckleitung 51, in eine Öffnungsstellung verschoben wird. Diese Öffnungsstellung des Schiebers 45 verbindet dann die Pumpendruckleitung 51 mit der Zahnradmotordruckleitung 52 und beaufschlagt den Zahnradmotor 19 der Nachstelleinrichtung 20 mit diesem Druck. Die Nachstellräder 16, 17 verdrehen somit in einer synchronen Verstellbewegung die Schraubspindeln 12 über die Zahnräder 16, 14, 13, wodurch die Zuspannelemente 9 der Zuspannzylinder 11 in Richtung auf die Bremsscheibe 2 verstellt werden und den ermittelten Verschleißweg des Bremsbelags 3 bzw. 3' nachstellen, bis das Lüftspiel des Normalzustands wieder hergestellt ist. Zur genauen Messung dieses Nachstellwegs können unterschiedliche Geber dienen, zum Beispiel Winkelgeber am Zahnradmotor 19. Dies kann zum Beispiel ein Mehrgangpotenziometer sein, dessen elektrischer Widerstand sich über einen Verdrehwinkel, der proportional zum Nachstellweg ist, proportional zum Nachstellweg verändert und somit ein Maß für den Nachstellweg bildet.

Auch der Elektroantrieb 30 kann als Messgröße der Verstellung verwendet werden, denn dieser besitzt häufig zu seiner Ansteuerung bereits einen Drehwinkelgeber, wobei der Drehwinkel damit als Verstellmessgröße verwendet werden kann, sofern der Schlupf der beiden Zahnradantriebe 19, 30 vernachlässigbar ist.

Der Nachstellvorgang wird, wenn das normale Lüftspiel erreicht ist, beendet, indem über das Umschaltventil 38 der Steuerantrieb 28 zur Ausschaltung des Hydraulikschalters 44 über die Hydraulikschalter-Steuerleitung 53 betätigt wird, wodurch der Zahnradmotor 19 ausgeschaltet wird, und dann der elektromotorische Aktuator 30 ausgestellt wird.

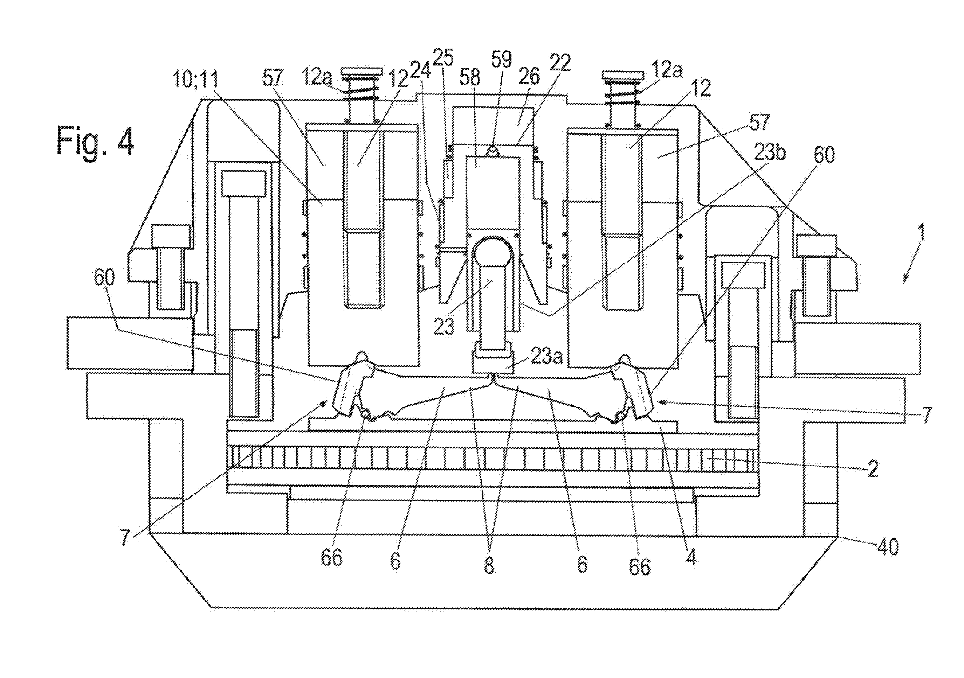

Fig. 4 zeigt eine schematische Teilschnittdarstellung des zweiten Ausführungsbeispiels nach Fig. 2 in einer Normalstellung mit maximalem Verschleiß der Bremsbeläge 3, 3'. Es ist deutlich zu sehen, dass die Zuspannkolben 10 in den Zuspannzylindern 11 durch die heraus geschraubten Schraubspindeln 12 nach unten in Richtung Bremsscheibe 2 verstellt sind. Dabei sind Zuspanndruckkammern 57 der Zuspannzylinder 11 mit Hydraulikflüssigkeit nachträglich angefüllt, um den Nachstellweg auszugleichen. Dies kann durch den Vorratskreis 46 und weiter über die Vordruckkammer 33, welche wiederum mit den Hochdruckkamern 34, 34' verbunden sind, erfolgen. Der Stufenkolben 32 ist zu diesem Zweck in Ruhestellung (linker Anschlag). Dieser Vorgang sorgt auch für ein stetes langsames Nachströmen neuen Öls über den Zeitraum des Belagverschleißens. Älteres Öl kann sich dabei in den Zuspannkammern 57 ansammeln. Außerdem hat die Verschleißnachstellung des Bremsbelages 3 zur Folge, dass die Umlenkhebel 6 mit ihren Druckabschnitten 8 ebenfalls um den Nachstellweg verstellt sind. Ohne einen Ausgleich dieses Nachstellwegs würde eine Funktion des Tangentialkraftaufnahmezylinders 21 nicht über den gesamten Nachstellweg möglich sein. Dazu ist der Aufnahmestufenkolben 22 des Tangentialkraftaufnahmezylinders 21 mit einem Nachstellkolben 23b versehen, welcher zwischen dem Stößel 23 und dem Aufnahmestufenkolben 22 in diesem koaxial verschiebbar angeordnet ist. Dieser Nachstellkolben 23b befindet sich in dem Aufnahmestufenkolben 22 und bildet mit diesem eine Nachstellkammer 58 welche über ein Richtungsventil 59 mit der dritten Druckkammer 26 des Tangentialkraftaufnahmezylinders 21 kommuniziert.

Die Nachstellung des Nachstellkolbens 23b verläuft ebenfalls über den Vorratskreis 46, indem über die Steuereinheit 27 die Druckkammern 24 bis 26 vom Vorratskreis 46 aufgefüllt werden. Nachdem der Aufnahmestufenkolben 22 seinen äußeren Anschlag erreicht hat, füllt sich auch die Nachstellkammer 58 über das Richtungsventil 59 so lange, bis der Nachstellkolben 23b über den Stößel 23 von den beiden Umlenkhebeln 6 gehalten wird. Der Druck im Vorratskreis 46 muss hierzu ausreichend sein. Dieser Druck kann aber auch über zusätzliche Druckerhöhungsmaßnahmen mittels des elektromotorischen Aktuators 30 über zusätzliche Ventile und Regelungen erhöht werden, wobei der Nachstellweg des Nachstellkolbens 23b über die Messung des Restvolumens im Ausdegnungsgefäß 36 oder über geeignete weitere Geber erfasst werden kann. Wird nun über den Stößel 23 beim Bremsvorgang Kraft auf den Nachstellkolben 23b eingeleitet, so kann die Hydraulikflüssigkeit in der Nachstellkammer 58 aufgrund des Richtungsventils 59 nicht entweichen. Bei einem Belagwechsel und Rückstellung der Nachstelleinrichtung 20 wird die Nachstellkammer 58 ebenfalls entleert, was zum Beispiel durch Öffnen des Richtungsventils 59 mittels eines geeigneten Werkzeugs oder mittels eines Stifts, der zentrisch im Boden der Druckkammer 26 platziert ist, erfolgen kann. Dies wird im Folgenden erläutert.

Eine Nachstellung des Belagverschleißes erfolgt jeweils nach dem Lösen der Feststellbremse bzw. Parkbremse. Der Arbeitsraum der Zylinder des Aufnahmestufenkolbens 22, das heißt die Druckkammern 24, 25 und 26, ermöglicht einen etwas größeren Bewegungsweg als die Umlenkhebel 6 in ihrer maximalen Auslenkung dies erfordern. Damit kann sich der Nachstellkolben 23b automatisch einregeln. Zum Ausfahren des Kolbens 23b wird zusätzliches Öl durch das Richtungsventil 59 als Rückflussverhinderer in den Zylinderraum (Nachstellkammer 58) oberhalb des Nachstellkolbens 23b eingelassen. Dies geschieht, wenn mittels Spindeln 12 die Zuspannkolben 10 nach Ende der Park- bzw. Handbremsenbetätigung weiter in Richtung Bremsscheibe 2 verstellt wurden (wegen Belagverschleiß). Der Aufnahmestufenkolben 22 gelangt dadurch an seinen äußeren Bewegungsanschlag. Der hydraulischer Druck im Nachstellkolben 23b, das heißt in der Nachstellkammer 58, sinkt ab, so dass sich das Richtungsventil 59 öffnet und Öl in die Nachstellkammer 58 einfließt.

Das umgekehrte Einfahren des Nachstellkolbens 23b erfolgt beim Wechsel der Bremsbeläge 3, 3' und/oder der Bremsscheibe 2. Dazu werden die Spindeln 12 durch den Zahnradmotor 19 hydraulisch derart betätigt, dass die Zuspannkolben 10 eingefahren werden. Damit wird auch der Aufnahmestufenkolben 22 eingefahren. Das Hydrauliköl oberhalb der Zuspannkolben 10 sowie des Aufnahmestufenkolbens 22 wird in das Ausdehnungsgefäß 36 gedrückt. Der Aufnahmestufenkolben 22 wird dabei soweit zurückgefahren, bis dessen Kolbenbodenfläche den Zylinderraumboden der dritten Druckkammer 26 berührt. Kurz vor diesem Berührpunkt drückt ein Stift (nicht dargestellt, aber leicht vorstellbar), welcher zentrisch im Boden der dritten Druckkammer 26 platziert ist, auf das Richtungsventil 59, so dass sich dieses öffnet und das in der Nachstellkammer 58 befindliche Öl über die dritte Druckkammer 26 und weiter über die Hochdruckkammern 34, 34', die Vordruckkammer 33 in das Ausdehnungsgefäß 36 gedrückt wird. Damit entsteht auf einfache Art eine Lageregelung für den Aufnahmestufenkolben 22, so dass dieser trotz gelegentlicher Belagverschleißnachstellung dem Bewegungsablauf der Umlenkhebel 6 folgen kann, ohne durch seine mechanischen Anschläge behindert zu werden.

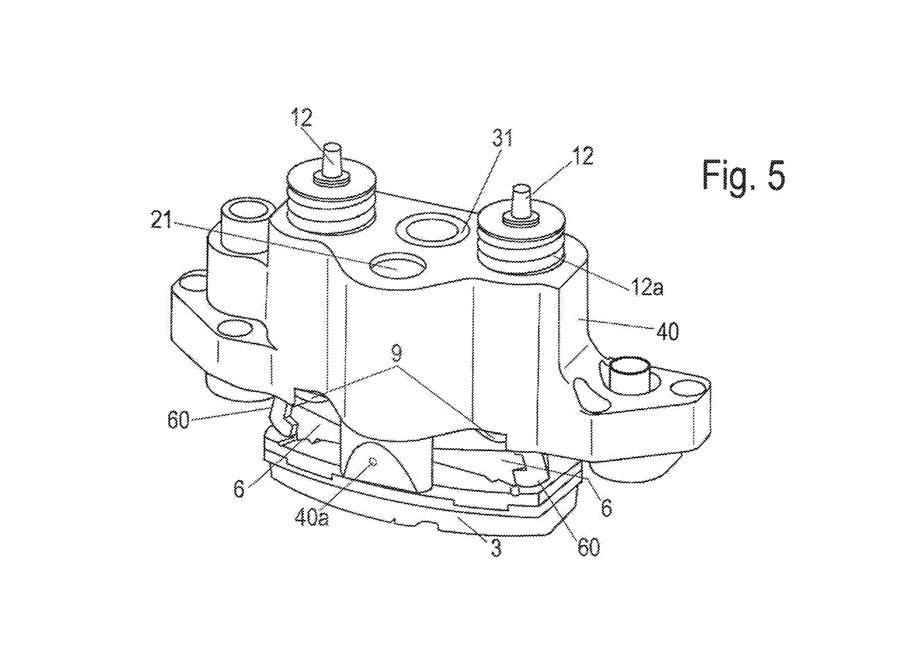

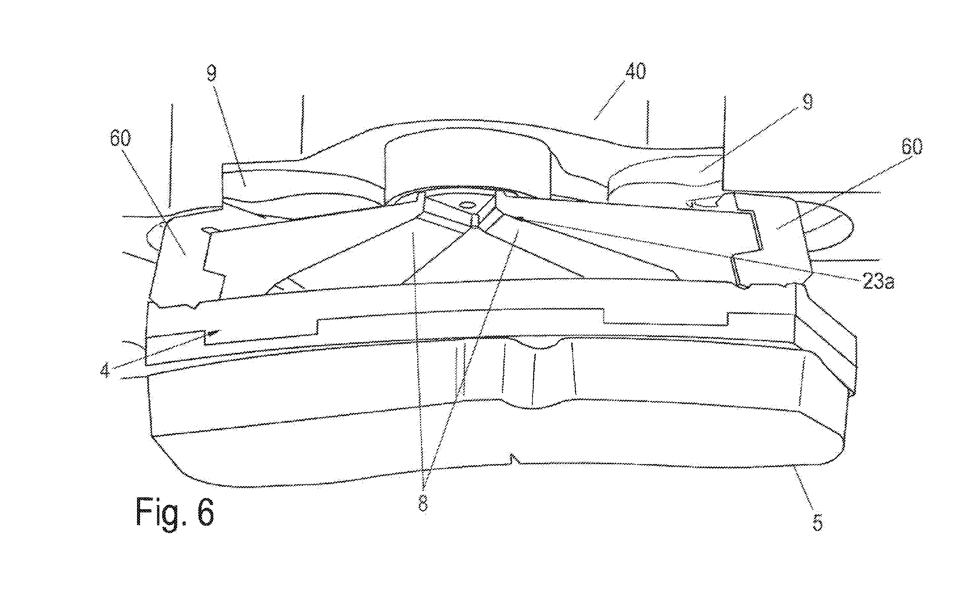

In Fig. 5 ist eine schematische Perspektivansicht des zweiten Ausführungsbeispiels nach Fig. 2 gezeigt; und Fig. 6 ist eine schematische Perspektivansicht eines Ausschnitts aus Fig. 5.

Fig. 5 zeigt einen Abschnitt des Bremssattels 40, in welchem hier alle Hydraulikkomponenten angeordnet sind. Zwischen den Zuspannzylindern 11, von denen hier die oberen Enden der Schraubspindeln 12 mit den Rückholfedern 12a zu sehen sind, sind der Tangentialkraftaufnahmezylinder 21 und der Verteilerzylinder 31 hintereinander angeordnet, wobei diese Zylinder 11, 21 und 13 im Wesentlichen alle parallel zueinander liegen. Im unteren Bereich, den Fig. 6 in einer anderen Perspektive darstellt, ist ein Anschlagelement 40a zwischen Bremssattel 40 und Belagträger 4 unterhalb des Tangentialkraftaufnahmezylinders 21 angeordnet. Während sich das Anschlagelement 40a auf der Außenseite unterhalb des Stufenkolbens 22 befindet, kann auf der Innenseite unterhalb des Verteilerzylinders 31 auch eine Feder zum Zusammenhalten von Zuspannkolben 10 und Bremsbelag 3 platziert werden. Der Bremsbelag 3 ist entsprechend der Bremsscheibe 2 kreisbogenförmig, wobei die Umlenkhebel 6 mit den Schulterelementen 60 zwischen Kolbenelementen 9 und der Auflagereinrichtung 5 angeordnet sind und die Druckabschnitten 8 radial nach außen weisen und an der Druckplatte 23a anliegen.

Fig. 7 stellt eine schematische Seitenansicht eines Ausführungsbeispiels eines erfindungsgemäßen Umlenkhebels 6 dar. Der auf der rechten Seite befindliche zweite Umlenkhebel 6 ist nicht gezeigt, aber gemäß den vorhergehenden Figuren leicht vorstellbar.

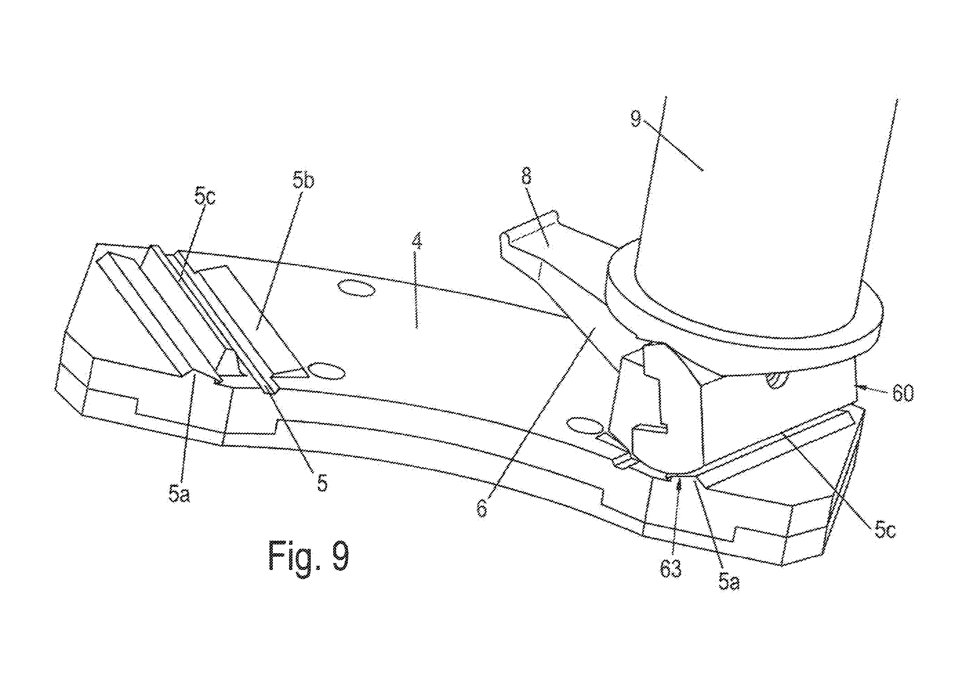

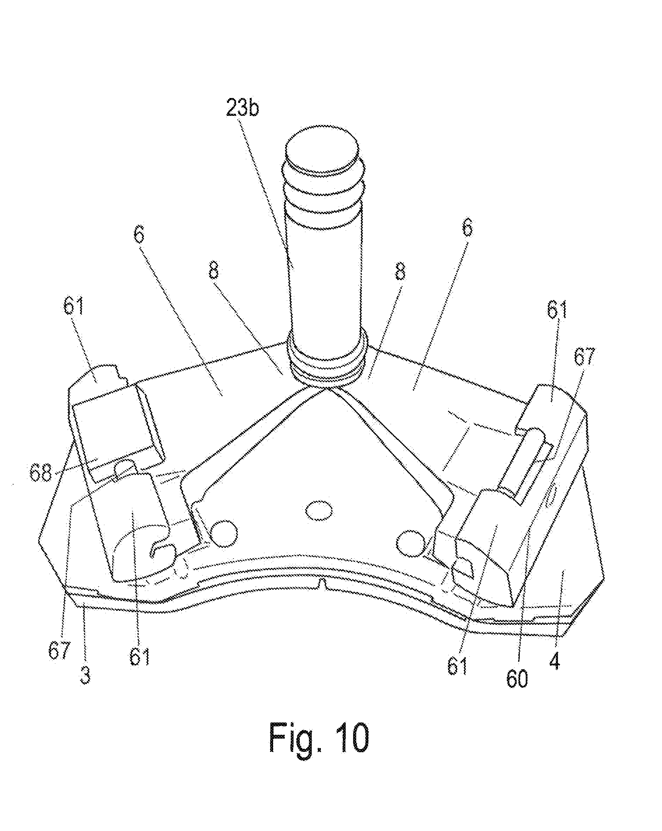

Die Kraftübertragungseinheit 7 weist wie bereits oben beschrieben einen Umlenkhebel 6 und ein Schulterelement 60 auf. Das Schulterelement 60 ist mit dem Umlenkhebel 6 auf dessen Seite, welche dem Druckabschnitt 8 gegenüberliegt, in diesem Beispiel federnd über eine lose verschraubte Tellerfederverbindung in Längsrichtung des Umlenkhebels 6, d.h. von links nach rechts in der Fig. 8 erkennbar, verbunden. Das Schulterelement 60 ist zwischen dem Zuspannelement 9 und dem Belagträger 4 des Bremsbelags 3 (siehe auch Fig. 2 bis 6) angeordnet. Es weist an seiner Oberseite einen Schulterabschnitt Zuspannkrafteinleitung 61 auf, welcher mit einer Abrollfläche zur Zuspannkrafteinleitung versehen ist. Diese gewölbte Abrollfläche kontaktiert in einer Linienberühning eine korrespondierende ebene Abrollfläche 64 an der Unterseite des Zuspannelementes 9. Die vom Zuspannelement 9 so in das Schulterelement 60 eingeleitete Zuspannkraft (in der Fig. 7 in vertikaler Richtung) wird durch einen Schulterabschnitt Zuspannkraftübertragung 62 des Schulterelementes 60 in dessen unteren Abschnitt weitergeleitet. An der Unterseite des Schulterelementes 60 ist eine ebenfalls gewölbte Abrollfläche in einem ebenen Schulterabschnitt Zuspannkraftüberleitung 63 ausgebildet. Diese untere Abrollfläche des Schulterabschnitts Zuspannkraftüberleitung 63 steht mit einem ersten Auflagerabschnitt 5a der Auflagereinrichtung 5 in Kontakt und überträgt die Zuspannkraft in die Auflagereinrichtung 5 und somit in den Bremsbelag 3. Der erste Auflagerabschnitt 5a bildet eine zur Abrollfläche des Schulterabschnitts Zuspannkraftüberleitung 63 korrespondierende Abrollfläche. Die Schulterabschnitte 62, 63, 64 erstrecken sich im Wesentlichen senkrecht zur Zeichnungsebene der Fig. 7, was aus Fig. 9 und 10 deutlich ersichtlich ist. Das Schulterelement 60 dient auf diese Weise zur Übertragung von Zuspannkräften, auch wenn der Bremsbelag 3 beim Bremsvorgang in Tangentialrichtung ausgelenkt ist. Dabei rollen die Abrollflächen der Schulterabschnitte 61 und 63 auf den jeweils mit ihnen korrespondierenden Abrollflächen 64 und 5a ab wie ein zylindrischer Körper zwischen zwei parallel angeordneten Flächen. Durch die lose verschraubte Tellerfederverbindung kann gewährleistet werden, dass auch bei aufgeweiteten Fertigungstoleranzen kein Rutschen während des Abrollens auftritt.

Das Schulterelement 60 besitzt gegenüber dem Umlenkhebel 6 eine Bewegungsfreiheit. Dadurch wird gleichzeitig eine rutschfreie Abrollbewegung der vertikalen Zuspannkraft mittels des Schulterelementes 60 und der horizontalen Bremskraft mittels eines Rollenelementes 66 ermöglicht (siehe Fig. 8).

Die Auflagereinrichtung 5 weist einen zweiten Auflagerabschnitt 5b auf, welcher mit einem Kraftüberleitungsabschnitt 6a des Umlenkhebels 6 in Kontakt steht. Hierzu illustriert Fig. 8 eine schematische Längsschnittansicht der erfindungsgemäßen Kraftübertragungseinheit 7 nach Fig. 7.

In Fig. 8 ist ein mittlerer Bereich der Kraftübertragungseinheit 7 im Längsschnitt gezeigt. Hierzug dient Fig. 10 mit zugehöriger Beschreibung als weitere Orientierung.

Der Umlenkhebel 6 steht mit an seiner Unterseite über den Kraftüberleitungsabschnitt 6a mit dem zweiten Auflagerabschnitt 5b in Kontakt. Zwischen dem ersten Auflagerabschnitt 5a und dem zweiten Auflagerabschnitt 5b ist die Auflagereinrichtung 5 mit einem Auflagerabschnitt Tangentialkraft 5c ausgebildet. Dieser Auflagerabschnitt Tangentialkraft 5c ist zahnförmig gestaltet und erstreckt sich ebenfalls wie die Auflagerabschnitte 5a und 5b senkrecht zur Zeichnungsebene. Zwischen diesem zahnförmigen Auflagerabschnitt Tangentialkraft 5c und einer hinteren Schulter 6b des Kraftüberleitungsabschnitts 6a des Umlenkhebels 6 ist das Rollenelement 66, vorzugsweise eine Zylinderrolle, angeordnet, dessen Längsachse sich auch senkrecht zur Zeichnungsebene erstreckt. An seiner hinteren Oberseite ist der Umlenkhebel 6 oberhalb eines Befestigungsabschnitts für das Schulterelement 60 mit einem Zahnabschnitt 67 ausgebildet, welcher mit einem korrespondierenden Zahngegenstück 68 im Zuspannelement 9 in Kontakt steht. Das Schulterelement 60 ist mit einem Schultermittelabschnitt 65 an der Rückseite des Umlenkhebels mit der oben angegebenen Tellerfederverbindung angebracht.

Der Umlenkhebel 6 überträgt tangentiale Kräfte in Eingriff mit dem zweiten Auflagerabschnitt 5a, in Eingriff über das Rollenelement 66 mit dem Auflagerabschnitt Tangentialkraft 5c und in Eingriff mit dem Zahngegenstück 68. Die tangentialen Kräfte werden auch als horizontale Bremskräfte bezeichnet. Durch sie wird der Umlenkhebel 6 wie oben beschrieben verschwenkt und überträgt diese Tangentialkräfte über seinen Druckabschnitt 8 über die Druckplatte 23a auf den Tangentialkraftaufnahmezylinder 21. Das Rollenelement 66 überträgt Tangentialkräfte von dem zahnförmigen Auflagerabschnitt Tangentialkraft 5c auf die hintere Schulter 6b des Kraftüberleitungsabschnitts 6a des Umlenkhebels 6, wobei diese hintere Schulter 6b zum Abrollen des Rollenelementes eine speziell gekrümmte Oberfläche aufweisen kann. Die Krümmung am Auflagerabschnitt Tangentialkraft 5c (und an der hinteren Schulter 6b des Umlenkhebels 6, falls vorhanden) ist so berechnet, dass sie exakt harmonisch mit der Abrollbewegung auf der Auflagereinrichtung 5 (5c, 5b) übereinstimmt. Dadurch ist eine reibungsarme Kraftübertragung von Brems- und Zuspannkräften möglich.

Über den Zahnabschnitt 67 des Umlenkhebels 6 werden die Bremskräfte vom Umlenkhebel 6 auf den Zuspannzylinder 11 übertragen, von welchem sie wiederum in den Bremssattel 40 abgeleitet werden. Dabei müssen über den Zahnabschnitt 67 und das Rollenelement 66 nur solche Bremskräfte an das Gehäuse abgeleitet werden, welche über die Bremskräfte des mechanischen Gundkeilwinkels hinausgehen. Die Bremskräfte, welche dem mechanischen Keilwinkel entsprechen, werden über die schrägen Abrollflächen der Auflagereinrichtung 5 direkt vom Belagträger 4 über die Kraftübertragungseinheit 7 in die beiden Zuspannelemente 9 übertragen.

Die Zahnkontur des Zahnabschnitts 67 und des Zahngegenstücks 68 ist so gewählt, dass diese aufeinander wie Zahnräder abwälzen. Dabei ist der Wälzpunkt, an dem gleitfreies Abwälzen erfolgt, so gewählt, dass sich dieser bei einem Drittel einer maximalen Aussteuerung befindet. Das bedeutet, dass bei einem Drittel der Maximalauslenkung keine reibende Relativverschiebung zwischen Zahnabschnitt 67 und Zahngegenstück 68 stattfindet. Diese Auswahl ist so getroffen, da in der Häufigkeitsverteilung der Bremszustellung bei einem Drittel der maximalen Zustellkraft die höchste Anzahl von Bremsbetätigungen vorkommt, während eine maximale Zustellkraft bzw. Zuspannkraft relativ selten auftritt.

Das Schulterelement 60 zur Übertragung der Zuspannkräfte ist tief eingeschnürt, um dadurch eine bestimmte, geringe Elastizität zu erzeugen, damit der Abrollvorgang ohne Rutschen erfolgt.
Auch die Übertragung der Bremskräfte vom Umlenkhebel 6 über den Druckabschnitt 8 in die Druckplatte 23a und den Stößel 23 des Tangentialkraftaufnahmezylinders 21 erfolgt ausschließlich durch abrollende Bewegung.

Fig. 9 zeigt eine schematische perspektivische Ansicht eines Bremsbelags 3 mit der erfindungsgemäßen Kraftübertragungseinheit 7, welche hier nur auf der rechten Seite zwischen dem Zuspannelement 9 und der Auflagereinrichtung 5 gezeigt ist. Auf der linken Seite ist sie leicht vorstellbar. Die Auflagereinrichtung 5 des Belagträgers 4 ist auf der linken Seite mit den Abschnitten 5a, 5b und 5c gezeigt, welche sich in gerader Richtung radial zu einer (nicht gezeigten) Bremsscheibe erstrecken. In gleicher radialer Richtung erstreckt sich das Schulterelement 60, in dessen Mittelbereich eine Öffnung gezeigt ist, welche zur Aufnahme der oben erwähnten Tellerfederverbindung zur Befestigung des Schulterelementes 60 an dem Umlenkhebel 6 dient. An der Unterseite des Schulterelementes 60 ist der Schulterabschnitt Zuspannkraftüberleitung 63 in Kontakt mit dem ersten Auflagerabschnitt Zuspannkraft 5a gezeigt. Die Kontaktierung des Auflagerabschnitts Tangentialkraft 5c ist auf der rechten Seite von dem Schulterelement 60 verdeckt.

Da die Berührlinien der beiden Abrollebenen der Auflagereinrichtung 5 jeweils senkrecht zur Kreisbewegung der Bremsscheibe 2 angeordnet sind, folgt der Bremsbelag 3 bei seiner horizontalen Verschiebung annähernd der Kreisbewegung der Bremsscheibe 2. Dadurch minimieren sich die Querkräfte auf die beiden Kraftübertragungseinheiten 7, während gleichzeitig eine optimale Flächenausnützung des Bremsbelags 3 auf der Bremsscheibe 2 ermöglicht wird.

Ein weiterer Vorteil dieser Anordnung besteht darin, dass der Bewegungsablauf des Bremsbelags 3 nahezu identisch der Kreisbewegung der Bremsscheibe 2 folgt.

Weiterhin ist in der Fig. 9 zu erkennen, dass der Druckabschnitt 8 des Umlenkhebels 6 mit einer Abrollfläche versehen ist.

Schließlich illustriert Fig. 10 eine weitere perspektivische Ansicht eines Bremsbelags 3 mit Belagträger 4 mit zwei erfindungsgemäßen Kraftübertragungseinheiten 7 und einem Nachstellkolben 23b, welcher mit seiner Unterseite (Druckplatte 23a nicht sichtbar) die Druckabschnitte 8 der Umlenkhebel 6 kontaktiert. Die Umlenkhebel 6 verschwenken jeweils um radial angeordnete Schwenkachsen, wobei die radiale Anordnung sich auf eine nicht gezeigte Bremsscheibe bezieht. Die Umlenkhebel 6 sind im Wesentlichen rechtwinklig zu den radialen Schwenkachsen angeordnet, wobei ihre Breite und Höhe zum Druckabschnitt 8 hin geringer wird.

Die Schulterelemente 60 weisen beidseitig eines mittleren Abschnitts jeweils einen von zwei Schulterabschnitten Zuspannkrafteinleitung 61 auf. In der Mitte dazwischen befindet sich jeweils der Zahnabschnitt 67 des jeweiligen Umlenkhebels 6. Auf der linken Seite ist das Zahngegenstück 68, hier in Gestalt eines quaderförmigen Stücks, in Kontakt mit dem linken Zahnabschnitt 67 gezeigt. Das Zahngegenstück 68 kann wie hier gezeigt als ein separates Teil gefertigt und anschließend in die Unterseite des Zuspannelementes 9 eingesetzt werden.

Die erfindungsgemäße Scheibenbremse 1 weist somit folgende Eigenschaften und Vorteile auf:
- Elektromotorischer Antrieb
- Geringe elektrische Ansteuerleistung (zum Beispiel ca. 60 W bis max. 150 W)
- Hohe Energie- und Kraftdichte (180 kN Zustellkraft im Bauraum darstellbar)
- Automatische Selbstverstärkung in beide Fahrtrichtungen
- Einfache und zuverlässige Notlösefunktion durch stromlos offenes Magnetventil (Löseventil 37)
- Kraftübertragung hydraulisch mittels Bremsflüssigkeit
- Hydraulikkomponenten sind zuverlässige und bekannte Standardtechnologie
- Gute Gleit- und Schmiereigenschaften der Komponenten durch Verwendung von Öl
- Kompakte, leichte Bauweise
- Preisgünstige Zahnradpumpe anstelle teurem mechanischen Hochlastgetriebe
- Kürzerer Bremsweg durch bessere ABS-Regelung (geringe zu beschleunigende Massen)
- Kurze Ansprech- und Verstellzeit (geringe zu beschleunigende Massen bei gleichzeitig hoher Selbstverstärkung)
- Intelligente Verschleißnachstellung für rückseitige Beläge ohne zusätzlichen Motor
- Ein Elektromotor treibt über Zahnradpumpe
   - Bremszustellung
   - Antrieb der Steuereinheit (Ventilscheibe)
   - Nachstelleinrichtung
   - Parkbremse selbstverstärkend, rein mechanisch und in beide Fahrtrichtungen wirkend, zuverlässiges Lösen der blockierten Bremse
- Einfache und präzise Kraftmessung mittels Drucksensoren
- Unempfindlich gegenüber Vibrationen
- Robuste Regelung da spielfrei, keine mechanischen Zahnradpaarungen zur Bremskraftübertragung
- Dreistufige Umschaltung (Stufenkolben) ermöglicht sieben verschiedene Keilwinkel
- Direkte Messung der Zuspannkraft sowie der Bremskraft möglich
- Genaue Messung bzw. Erfassung des Anlegepunkts/Reibepunkts der Bremsbeläge durch Differenzdruckmessung
- Messung des Belagverschleißes ohne zusätzliche Verschleißwegsensoren, wobei ein Wegsensor eines Flüssigkeitsspiegels im Ausdehnungsbehälter zur Messung der Horizontalverstellung der Bremsbeläge, der Erkennung eines Hydraulikflüssigkeitsverlustes und zur Statuserfassung eines Bremsbelagverschleißes vorteilhaft verwendet werden kann.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

Die Gestalt der Umlenkhebel 6 kann anders als die gezeigte Form sein.

Die Steuereinheit 27 kann anstelle einer Steuerscheibe oder zusätzlich zu ihr auch Magnetventile aufweisen.

Die Nachstelleinrichtung 20 kann auch als Parkbremse Verwendung finden, indem die Schraubspindeln 12 zur Feststellung der Bremsbeläge 3, 3' an der Bremsscheibe 2 durch die vom elektromotorischen Aktuator 30 angetriebene Nachstelleinrichtung 20 verstellt werden. Dazu wird der elektromotorische Aktuator 30 in geeigneter Weise von einer Bremssteuereinheit über die Steuereinheit 27 angesteuert. Nach Feststellung der Bremsbeläge 3, 3' auf diese Weise verbleiben sie mit Hilfe der Keilwirkung der Auflagereinrichtung 5 ohne hydraulische Einwirkung in ihrer Parkbremsstellung. Ein sicheres Lösen erfolgt wieder durch den entsprechend gesteuerten elektromotorischen Aktuator 30, wobei das gleichzeitige Aufbauen eines hydraulischen Zuspanndrucks über den Druckverstärkungskolben, d.h. Stufenkolben 32 auf die Zuspannkolben 10 die Schraubspindeln 12 mechanisch entlastet und somit ein leichtes Lösen der Spindeln 12 ermöglicht.

### Bezugszeichenliste

- 1: Scheibenbremse
- 2: Bremsscheibe
- 3, 3': Bremsbelag
- 4: Belagträger
- 5: Auflagereinrichtung
- 5a: Erster Auflagerabschnitt Zuspannkraft
- 5b: Zweiter Auflagerabschnitt
- 5c: Auflagerabschnitt Tangentialkraft
- 6: Umlenkhebel
- 6a: Hebelkraftüberleitungsabschnitt
- 6b: Schulter
- 7: Kraftübertragungseinheit
- 8: Druckabschnitt
- 9: Zuspannelement
- 10: Zuspannkolben
- 11: Zuspannzylinder
- 12: Schraubspindel
- 12a: Rückholfeder
- 13: Schraubspindelrad
- 14: Nachstellritzel
- 15: Nachstellwelle
- 16: Nachstellwellenrad
- 17: Nachstellantriebsrad
- 18: Notlöseeinrichtung
- 19: Zahnradmotor
- 20: Nachstelleinrichtung
- 21: Tangentialkraftaufnahmezylinder
- 22: Aufnahmestufenkolben
- 23: Stößel
- 23a: Druckplatte
- 23b: Nachstellkolben
- 24: Erste Druckkammer
- 25: Zweite Druckkammer
- 26: Dritte Druckkammer
- 27: Steuereinheit
- 28: Steuerantrieb
- 29: Steuermelder
- 30: Elektromotorischer Aktuator (Pumpe)
- 31: Verteilerzylinder
- 32: Stufenkolben
- 33: Vordruckkammer
- 34, 34': Hochdruckkammer
- 35: Eingangsdruckkammer
- 36: Ausdehnungsgefäß
- 37: Löseventil
- 38: Umschaltventil
- 39: Ansaugventil
- 40: Bremssattel
- 40a: Anschlagelement
- 41: Erster Drucksensor
- 42: Zweiter Drucksensor
- 43: Dritter Drucksensor
- 44: Hydraulikschalter
- 45: Schieber
- 46: Vorratskreis
- 47: Zwischenkreis
- 48: Steuerantriebsrückleitung
- 49: Steuerantriebsdruckleitung
- 50: Pumpensaugleitung
- 51: Pumpendruckleitung
- 52: Zahnradmotordruckleitung
- 53: Hydraulikschalter-Steuerleitung
- 54: Hochdruckleitung
- 55: Zwischenleitungen
- 56: Verbindungsleitungen
- 57: Zuspanndruckkammer
- 58: Nachstellkammer
- 59: Richtungsventil
- 60: Schulterelement
- 61: Schulterabschnitt Zuspannkrafteinleitung
- 62: Schulterabschnitt Zuspannkraftübertragung
- 63: Schulterabschnitt Zuspannkraftüberleitung
- 64: Abrollfläche
- 65: Schultermittelabschnitt
- 66: Rollenelement
- 67: Zahnabschnitt
- 68: Zahngegenstück

## Patentansprüche

1. Scheibenbremse (1) in selbstverstärkender Bauart, mit:
a) einer bremseninternen Hydraulikanordnung mit einem Vorratskreis (46) und einem Ausdehnungsgefäß (36);
b) einer Zuspannvorrichtung mit zumindest einem Zuspannzylinder (11) zum Zuspannen zumindest eines Bremsbelages (3, 3') in Richtung einer Bremsscheibe (2);
c) zumindest einer Kraftübertragungseinheit (7), welche den zumindest einen Bremsbelag (3, 3') unter einem Keilwinkel an der Zuspannvorrichtung abstützt;
d) zumindest einem Tangentialkraftaufnahmezylinder (21) zur Keilwinkelumschaltung, der mit der zumindest einen Kraftübertragungseinheit (7) in Wirkungsverbindung steht;
e) einem elektromotorischen Aktuator (30), welcher auf die Zuspannvorrichtung über die Hydraulikanordnung einwirkt;
f) einer Steuereinheit (27), welche zur Steuerung der Keilwinkelumschaltung zwischen dem Tangentialkraftaufnahmezylinder (21) und dem elektromotorischen Aktuator (30) vorgesehen ist, und
g) wobei die zumindest eine Kraftübertragungseinheit (7) einen Umlenkhebel (6) und ein daran angebrachtes Schulterelement (60) aufweist, wobei der Umlenkhebel (6) und das Schulterelement (60) Abrollflächen aufweisen, die in Kontakt mit jeweiligen korrespondierenden Abrollflächen eines Zuspannelementes (9) des zumindest einen Zuspannzylinders (11) und einer Auflagereinrichtung (5) des Bremsbelags (3) stehen,
h) und wobei der Umlenkhebel (6) einen Druckabschnitt (8) mit einer Abrollfläche aufweist, die in Wirkungsverbindung mit dem zumindest einen Tangentialkraftaufnahmezylinder (21) steht.
**dadurch gekennzeichnet, dass**
i) das Schulterelement (60) mit dem Umlenkhebel (6) über eine elastische Befestigung wie z.B. über eine Verschraubung mit Hilfe einer Tellerfeder, verbunden ist.

2. Scheibenbremse (1) nach Anspruch 1, **dadurch gekennzeichnet, dass** bei zwei und mehr Zuspannzylindern (11) ein Verteilerzylinder (31) zur parallelen, kippfreien Betätigung eines breiten Bremsbelags 3 sowie gleichzeitig wahlweise zur Druckverstärkung zwischen dem elektromotorischen Aktuator (30) und der Zuspannvorrichtung in Reihe angeordnet ist.

3. Scheibenbremse (1) nach einem der vorhergehenden Ansprüche, **dadurch gekennzeichnet, dass** der Umlenkhebel (6) einen Kraftüberleitungsabschnitt (63) und eine damit verbundene Schulter (6b) zur Zusammenwirkung mit der Auflagereinrichtung (5) aufweist.

4. Scheibenbremse (1) nach Anspruch 3, **dadurch gekennzeichnet, dass** die Kraftübertragungseinheit (7) weiterhin ein Rollenelement (66) zur Zusammenwirkung zwischen der Auflagereinrichtung (5) und der Schulter (6b) des Umlenkhebels (6) aufweist.

5. Scheibenbremse (1) nach Anspruch 4, **dadurch gekennzeichnet, dass** die Schulter (6b) des Umlenkhebels (6) über das Rollenelement (66) mit einem Auflagerabschnitt (5c) der Auflagereinrichtung (5) zusammenwirkt.

6. Scheibenbremse (1) nach Anspruch 5, **dadurch gekennzeichnet, dass** die Schulter (6b) des Umlenkhebels (6) eine ebene oder gekrümmte Oberfläche und/oder der Auflagerabschnitt (5c) der Auflagereinrichtung (5) eine gekrümmte oder ebene Oberfläche aufweisen.

7. Scheibenbremse (1) nach Anspruch 6, **dadurch gekennzeichnet, dass** der Auflagerabschnitt (5c) der Auflagereinrichtung (5) zahnförmig ausgebildet ist.

8. Scheibenbremse (1) nach einem der Ansprüche 4 bis 7, **dadurch gekennzeichnet, dass** die gekrümmte Kontur (6b) in Ihrer Form so berechnet und gestaltet ist, dass das Rollenelements (66) zur horizontalen Bremskraftübertragung sowie die Abrollflächen (63 und 64) zur Zuspannkraftübertragung über ihren jeweils kompletten Abrollweg ein gleitfreies Abwälzen ermöglichen.

9. Scheibenbremse (1) nach einem der Ansprüche 1 bis 7, **dadurch gekennzeichnet, dass** der Umlenkhebel (6) einen Zahnabschnitt (67) aufweist, welcher zur Zusammenwirkung mit einem Zahngegenstück (68) des Zuspannelementes (9) vorgesehen ist.

10. Scheibenbremse (1) nach Anspruch 9, **dadurch gekennzeichnet, dass** das Zahngegenstück (68) ein separates Bauteil zum Anbringen an das zumindest eine Zuspannelement (9) ist.

11. Scheibenbremse (1) nach Anspruch 9 oder 10, **dadurch gekennzeichnet, dass** ein Wälzpunkt, in dem gleitfreies Abwälzen des Zahnabschnitts (67) mit dem Zahngegenstück (68) erfolgt, so gewählt ist, dass er bei einem Drittel einer tangentialen Maximalauslenkung des Bremsbelags (3) liegt.

12. Scheibenbremse (1) nach einem der vorhergehenden Ansprüche, **dadurch gekennzeichnet, dass** das Schulterelement (60) zur Zusammenwirkung mit dem zumindest einen Zuspannzylinder (11) und der Auflagereinrichtung (5) des Bremsbelags (3) Abschnitte (61, 63) zur Zuspannkraftübertragung aufweist.

13. Scheibenbremse (1) nach einem der vorhergehenden Ansprüche, **dadurch gekennzeichnet, dass** das Schulterelement (60) eine Einschnürung zur Bildung einer geringfügigen Elastizität der Abrollfläche (5a) gegenüber der Abrollfläche (6b) aufweist.

14. Scheibenbremse (1) nach einem der vorhergehenden Ansprüche, **dadurch gekennzeichnet, dass** die Scheibenbremse (1) eine Nachstelleinrichtung (20) zur Nachstellung eines Bremsbelagverschleißes umfasst, wobei die Nachstelleinrichtung (20) eine verstellbare Schraubspindel (12), die in Wirkverbindung mit der Zuspannvorrichtung zur Nachführung des zumindest einen Bremsbelages (3, 3') steht und mit dem elektromotorischen Aktuator (30) zum Antrieb koppelbar ist, und einen Nachstellkolben (23b) aufweist, der in dem Tangentialkraftaufnahmezylinder (21) bei Nachführung des zumindest einen Bremsbelages (3, 3') hydraulisch verstellbar ist.

15. Scheibenbremse (1) nach einem der vorhergehenden Ansprüche, **dadurch gekennzeichnet, dass** die Steuereinheit (27) mit dem Vorratskreis (46) und mit einem Zwischenkreis (47) verbunden ist, wobei der elektromotorischen Aktuator (30) über ein Ansaugventil (39) mit dem Vorratskreis (46) verbunden ist, und über ein Umschaltventil (38) in einer ersten Stellung (a) mit dem Zwischenkreis (47) verbindbar ist.

16. Scheibenbremse (1) nach Anspruch 15, **dadurch gekennzeichnet, dass** in der ersten Stellung (a) des Umschaltventils (38) eine Änderung einer Bremszustellung nur durch Verstellen des elektromotorischen Aktuators (30) durchführbar ist.

17. Scheibenbremse (1) nach Anspruch 15 oder 16, **dadurch gekennzeichnet, dass** die Steuereinheit (27) in Zusammenwirkung mit einem Aufnahmeestufenkolben (22) des Tangentialkraftaufnahmezylinders (21) zur Auswahl eines einem momentanen Reibwert des Bremsbelags (3, 3') am nächsten liegenden wirksamen Keilwinkels ausgebildet ist.

18. Scheibenbremse (1) nach Anspruch 17, **dadurch gekennzeichnet, dass** die Steuereinheit (27) eine mittels eines hydraulischen Steuerantriebs (28) drehbare Loch- oder Steuerscheibe zur wahlweisen Verbindung von mit dem Aufnahmeestufenkolben (22) des Tangentialkraftaufnahmezylinders (21) in Verbindung stehenden Druckkammern (24, 25, 26) mit dem Vorratskeis (46) und/oder dem Zwischenkreis (47) aufweist.

19. Scheibenbremse (1) nach Anspruch 18, **dadurch gekennzeichnet, dass** die wahlweise Verbindung der Druckkammern (24, 25, 26) mit dem Vorratskeis (46) und/oder dem Zwischenkreis (47) nach dem Wirkprinzip einer binären Codierung in sieben Stufen mit steigender wirksamer Kolbenfläche des Aufnahmestufenkolbens (22) schaltbar ist.

20. Scheibenbremse (1) nach Anspruch 18 oder 19, **dadurch gekennzeichnet, dass** der elektromotorischen Aktuator (30) über das Umschaltventil (38) in einer zweiten Stellung (b) mit dem hydraulischen Steuerantrieb (28) der Steuereinheit (27) verbindbar ist, um die wahlweisen Verbindungen zum Zweck der Wahl eines flacheren oder steileren Keilwinkels zu schalten.

21. Scheibenbremse (1) nach Anspruch 20, **dadurch gekennzeichnet, dass** bei einem Umschaltvorgang des Umschaltventils (38) in Stellung b eine Pumpensaugleitung (47) des elektromotorischen Aktuators (30) mit einer Pumpendruckleitung (51) blockiert ist, so dass während des kurzen Umschaltenvorgangs der Steuereinheit (27) keine Änderung einer Bremszustellposition möglich ist.

22. Scheibenbremse (1) nach Anspruch 20 oder 21, **dadurch gekennzeichnet, dass** zur Stromeinsparung bei längerem gleichmäßigen Bremsen trotz eines bestehenden Differenzdrucks am elektromotorischen Aktuator (30) dessen Elektromotor stromlos geschaltet werden kann, indem das Umschaltventil (38) aus der ersten Stellung (a) in die zweite Stellung (b) umgeschaltet ist.

23. Scheibenbremse (1) nach einem der Ansprüche 18 bis 22, **dadurch gekennzeichnet, dass** die Steuereinheit (27) weitere Schaltstellungen aufweist, so dass zwischen jeder der wahlweisen Verbindungen bzw. jedem der möglichen schaltbaren Keilwinkel eine Sperrstellung existiert, in welcher die Druckkammern (24, 25, 26) und Verbindungen zu dem Vorratskeis (46) und/oder dem Zwischenkreis (47) abgesperrt sind und somit die momentan gewählte Bremszustellposition nicht veränderbar ist.

24. Scheibenbremse (1) nach einem der Ansprüche 20 bis 23, **dadurch gekennzeichnet, dass** der elektromotorische Aktuator (30) während der Dauer einer Bremsung nur mit dem Steuerantrieb (28) der Steuereinheit (27) in Wirkverbindung steht.

25. Scheibenbremse (1) nach Anspruch 23 oder 24, **dadurch gekennzeichnet, dass** während konstanter Bremszustellposition die Loch- oder Steuerscheibe in einer Sperrstellung steht, welche sich zwischen einem gegenüber aktuellem Keilwinkel mehr überkritischen und einem mehr unterkritischen Keilwinkel befindet, und dass in dieser Stellung der elektromotorische Aktuator (30) stromlos ist.

26. Scheibenbremse (1) nach Anspruch 24 oder 25, **dadurch gekennzeichnet, dass** bei einem Wunsch nach einer etwas stärkeren Bremszustellung mittels des elektromotorischen Aktuators (30) und des Steuerantriebs (28) die Loch- bzw. Steuerscheibe derart verstellbar ist, dass diese Loch- bzw. Steuerscheibe in Wirkweise eines Proportionalventils aus der Sperrstellung langsam in Richtung der Stellung eines überkritischen Keilwinkels verstellt wird.

27. Scheibenbremse (1) nach Anspruch 24 oder 25, **dadurch gekennzeichnet, dass** bei einem Wunsch nach einer etwas schwächeren Bremszustellung mittels des elektromotorischen Aktuators (30) und des Steuerantriebs (28) die Loch- bzw. Steuerscheibe derart verstellbar ist, dass diese Loch- bzw. Steuerscheibe in Wirkweise eines Proportionalventils aus der Sperrstellung langsam in Richtung der Stellung eines unterkritischen Keilwinkels verstellt wird.

28. Scheibenbremse (1) nach einem der vorhergehenden Ansprüche, **dadurch gekennzeichnet, dass** die bremseninternen Hydraulikanordnung zum Zweck eines schnellen Lösens der Bremse, zum Beispiel im Falle eines Fehlers oder bei fehlender Versorgungsspannung der Bremse, ein stromlos durchschaltendes Löseventil (37) für ein sofortiges und zuverlässiges Lösen der Bremse aufweist.

## Claims

1. Disc brake (1) of the self-energising type, comprising:
(1) an internal hydraulic system within the brake, including a supply circuit (46) and an expansion tank (36);
(b) a brake application device including at least one brake application cylinder (11) for application of at least one brake lining s (3, 3') in a direction towards a brake disc (2);
(c) at least one power transmission unit (7) which support said at least one brake lining (3, 3') at a wedge angle on said brake application device;
(d) at least one tangential power input cylinder (21) for wedge angle changeover, which is operatively connected to said at least one power transmission unit (7);
(e) an electromotive actuator (30) that acts upon said brake application device via said hydraulic system;
(f) a controller (27) which is provided between said tangential power input cylinder (21) and said electromotive actuator (30) for control of the wedge angle changeover, and
(g) wherein said at least one power transmission unit (7) is provided with a reversing lever (6) and a shoulder element (60) attached thereon, with said reversing lever (6) and said shoulder element (60) presenting rolling surfaces that are contacting respective corresponding rolling surfaces of a brake application element (9) of said at least one brake application cylinder (11) and a bearing means (5) of said brake lining (3),
(h) and wherein said reversing lever (6) is provided with a pressurising portion (8) with a rolling surface that is operatively connected to said at least one tangential power input cylinder (21),
**characterised in that**
(i) said shoulder element (60) is connected to said reversing lever (6) via an elastic mounting means such as a screw connection using a disc spring.

2. Disc brake (1) according to Claim 1, **characterised in that** with two and more brake application cylinders (11), a distributor cylinder (31) is disposed in series between said electromotive actuator (30) and said brake application device for parallel operation free of tilting of a broad brake lining (3) as well as, at option, for simultaneous pressure amplification.

3. Disc brake (1) according to any of the preceding Claims, **characterised in that** said reversing lever (6) is provided with a power conduction portion (63) and a shoulder (6b) connected thereto for interaction with said bearing means (5).

4. Disc brake (1) according to Claim 3, **characterised in that** said power transmission unit (7) is moreover provided with a roller element (66) for interaction between said bearing means (5) and said shoulder (6b) of said reversing lever (6).

5. Disc brake (1) according to Claim 4, **characterised in that** said shoulder (6b) of said reversing lever (6) interacts with a bearing portion (5c) of said bearing means (5) via said roller element (66).

6. Disc brake (1) according to Claim 5, **characterised in that** said shoulder (6b) of said reversing lever (6) presents a plane or curved surface and/or said bearing portion (5c) of said bearing means (5) presents a curved or plane surface.

7. Disc brake (1) according to Claim 6, **characterised in that** said bearing portion (5c) of said bearing means (5) has a tooth-shaped configuration.

8. Disc brake (1) according to any of the Claims 4 to 7, **characterised in that** the shape of said curved contour (6b) is so computed and designed that said roller element (66) for horizontal brake power transmission as well as said rolling surfaces (63 and 64) for transmission of the brake application force permit a slide-free rolling motion over their respective complete rolling distance.

9. Disc brake (1) according to any of the Claims 1 to 7, **characterised in that** said reversing lever (6) is provided with a tooth portion (67) that is intended for interaction with a tooth counterpart (68) of said brake application element (9).

10. Disc brake (1) according to Claim 9, **characterised in that** said tooth counterpart (68) is a separate component for attachment on said at least one brake application element (9).

11. Disc brake (1) according to Claim 9 or 10, **characterised in that** a pitch point, in which a slide-free rolling motion of said tooth portion (67) takes place with said tooth counterpart (68), is so selected that it ranges at one third of a tangential maximum deflection of said brake lining (3).

12. Disc brake (1) according to any of the preceding Claims, **characterised in that** said shoulder element (60) is provided with portions (61, 63) for transmission of the brake application force for interaction with said at least one brake application cylinder (11) and said bearing means (5) of said brake lining (3).

13. Disc brake (1) according to any of the preceding Claims, **characterised in that** said shoulder element (60) is provided with a constriction for creation of a slight elasticity of said rolling surface (5a) relative to said rolling surface (6b).

14. Disc brake (1) according to any of the preceding Claims, **characterised in that** the disc brake (1) includes a readjustment means (20) for readjustment of brake lining wear, with said readjustment means (20) being provided with an adjustable screw spindle (12), which is operatively connected to said brake application device for correction of said at least one brake lining (3, 3') and is adapted for coupling to said electromotive actuator (30) for driving, as well as a readjustment piston (23b), which is hydraulically adjustable in said tangential power input cylinder (21) in the case of correction of said at least one brake lining (3, 3').

15. Disc brake (1) according to any of the preceding Claims, **characterised in that** said controller (27) is connected to said supply circuit (46) and to an intermediate circuit (47), with said electromotive actuator (30) being connected through an intake valve (39) to said supply circuit (46) and being adapted for connection via a changeover valve (39) in a first position (a) to said intermediate circuit (47).

16. Disc brake (1) according to Claim 15, **characterised in that** with said changeover valve (38) being in its first position, a change in brake application can be carried out only by adjustment of said electromotive actuator (30).

17. Disc brake (1) according to Claim 15 or 16, **characterised in that** said controller (27), interacting with a stepped input piston (22) of said tangential power input cylinder (21), is configured for the selection of an efficient wedge angle that comes closest to an instantaneous coefficient of friction of said brake lining (3, 3').

18. Disc brake (1) according to Claim 17, **characterised in that** said controller (27) includes a perforated disc or control disc rotatable by means of a hydraulic open-loop actuator (28) for the selective connection of pressure chambers (24, 25, 26), which communicate with said stepped intake piston (22) of said tangential power input cylinders (21), to said supply circuit (46) and/or said intermediate circuit (47).

19. Disc brake (1) according to Claim 18, **characterised in that** the selective connection of said pressure chambers (24, 25, 26) to said supply circuit (46) and/or said intermediate circuit (47) can be switched in correspondence with the operating principle of a binary coding in seven stages with an increased effective piston surface of said stepped intake piston (22).

20. Disc brake (1) according to Claim 18 or 19, **characterised in that** said electromotive actuator (30) is adapted to be connected via said changeover valve (38) in a second position (b) to said hydraulic open-loop actuator (28) of said controller (27) for switching the optional connections for selection of a flatter or a more acute wedge angle.

21. Disc brake (1) according to Claim 20, **characterised in that** during a changeover operation of said changeover valve (38) in position (b), a pump suction line (47) of said electromotive actuator (30) is blocked with a pump pressure line (51) so that during the short changeover operation of said controller (27) a change of a brake application position is not possible.

22. Disc brake (1) according to Claim 20 or 21, **characterised in that** despite of a differential pressure prevailing on said electromotive actuator (30), the motor of said actuator can be switched into a currentless state by changing over said changeover valve (38) from its first position (a) into its second position (b), so as to save electric power in the case of prolonged uniform brake application.

23. Disc brake (1) according to any of the Claims 18 to 22, **characterised in that** said controller (27) has further switching positions so that a blocking position exists between each of said optional connections or each of the possible switchable wedge angles, in which said pressure chambers (24, 25, 26) and connections to said supply circuit (46) and/or said intermediate circuit (47) are shut off and hence the currently selected brake application position cannot be changed.

24. Disc brake (1) according to any of the Claims 20 to 23, **characterised in that** said electromotive actuator (30) is operatively connected only to said open-loop actuator (28) of said controller (27) throughout the period of a braking cycle.

25. Disc brake (1) according to Claim 23 or 24, **characterised in that** said perforated or control disc is in a blocking position throughout a constant brake application position, which is between a wedge angle more supercritical relative to the current wedge angle and a wedge angle subcritical relative to the current wedge angle, and that said electromotive actuator (30) is currentless in this position.

26. Disc brake (1) according to Claim 24 or 25, **characterised in that** whenever a slightly stronger brake application by means of said electromotive actuator (30) and said open-loop actuator (28) is desired, said perforated disc or control disc is so adjustable that this perforated disc or control disc is slowly adjusted from the blocking position towards the position of a supercritical wedge angle in the operating mode of a proportional valve.

27. Disc brake (1) according to Claim 24 or 25, **characterised in that** whenever a slightly weaker brake application by means of said electromotive actuator (30) and said open-loop actuator (28) is desired, said perforated disc or control disc is so adjustable that this perforated disc or control disc is slowly adjusted from the blocking position towards the position of a subcritical wedge angle in the operating mode of a proportional valve.

28. Disc brake (1) according to any of the preceding Claims, **characterised in that** said hydraulic system internal of the brake system comprises a release valve (37) through-connecting in a currentless state for immediate and reliable release of the brake, for the purpose of rapid brake release, e.g. in the event of a failure or in the case of lack of voltage supply of the brake.

## Revendications

1. Frein à disque (1) du type à auto-amplification hydraulique, comprenant :
(1) un système hydraulique interne à l'intérieur du frein, renfermant un circuit de stockage (46) et un réservoir d'expansion (36) ;
(b) un dispositif de serrage du frein, renfermant au moins un cylindre de serrage du frein (11) pour le serrage d'au moins une garniture de freinage (3, 3') en une direction vers un disque de frein (2) ;
(c) au moins un bloc de transmission de force (7), qui appuie ladite au moins une garniture de freinage (3, 3') à un angle de coin audit dispositif de serrage du frein ;
(d) au moins un cylindre de prise de force tangentiel (21) pour la commutation de l'angle de coin, qui est relié fonctionnellement audit au moins un bloc de transmission de force (7) ;
(e) un actionneur à moteur électrique (30), qui agit sur ledit dispositif de serrage du frein via ledit système hydraulique ;
(f) une unité de commande (27), qui est dispose entre ledit cylindre de prise de force tangentiel (21) et ledit actionneur à moteur électrique (30) pour la commande de la commutation de l'angle de coin, et
(g) dans lequel ledit au moins un bloc de transmission de force (7) est muni d'un levier de renvoi (6) et un élément d'épaulement (60) y monté, audit levier de renvoi (6) et audit élément d'épaulement (60) présentant des surfaces de roulement, qui se trouvent en contact avec des surfaces de roulement correspondantes respective d'un élément de serrage de frein (9) dudit au moins un cylindre de serrage de frein (11) et d'un moyen d'appui (5) de ladite garniture de freinage (3),
(h) et dans lequel ledit levier de renvoi (6) est muni d'une partie de compression (8) à une surface de roulement, qui est reliée fonctionnellement audit au moins un cylindre de prise de force tangentiel (21),
**caractérisé en ce que**
(i) ledit élément d'épaulement (60) est relié audit levier de renvoi (6) via un moyen de montage élastique comme une connexion par vis employant rondelle Belleville.

2. Frein à disque (1) selon la revendication 1, **caractérisé en ce qu'**à deux et plus cylindres de serrage de frein (11), un cylindre distributeur (31) est dispose en chaîne entre ledit actionneur à moteur électrique (30) et ledit dispositif de serrage du frein pour une opération en parallèle sans basculement d'une garniture de freinage large (3) ainsi que pour une amplification de pression simultanée, à volonté.

3. Frein à disque (1) selon une quelconque des revendications précédentes, **caractérisé en ce que** ledit levier de renvoi (6) est muni d'une partie de transition de force (63) et d'un épaulement (6b) y relié pour la coopération avec ledit moyen d'appui (5).

4. Frein à disque (1) selon la revendication 3, **caractérisé en ce que** ledit bloc de transmission de force (7) est au plus muni d'un élément de rouleau (66) pour la coopération entre ledit moyen d'appui (5) et ledit épaulement (6b) dudit levier de renvoi (6).

5. Frein à disque (1) selon la revendication 4, **caractérisé en ce que** ledit épaulement (6b) dudit levier de renvoi (6) coopère avec une partie d'appui (5c) dudit moyen d'appui (5) via ledit élément de rouleau (66).

6. Frein à disque (1) selon la revendication 5, **caractérisé en ce que** ledit épaulement (6b) dudit levier de renvoi (6) présente une surface plane ou incurve et/ou ladite partie d'appui (5c) dudit moyen d'appui (5) présente une surface incurve ou plane.

7. Frein à disque (1) selon la revendication 6, **caractérisé en ce que** ladite partie d'appui (5c) dudit moyen d'appui (5) a une configuration sous forme de dent.

8. Frein à disque (1) selon une quelconque des revendications 4 à 7, **caractérisé en ce que** la forme dudit contour incurvée (6b) est calculée et conçue de façon, que ledit élément de rouleau (66) pour la transmission de horizontale de l'effort de freinage ainsi que lesdites surfaces de roulement (63 et 64) pour la transmission de l'effort de serrage du frein permettent un mouvement roulant sans glissement sur toute leur distance de roulement complète respective.

9. Frein à disque (1) selon une quelconque des revendications 1 à 7, **caractérisé en ce que** ledit levier de renvoi (6) est muni d'une partie en dent (67), qui est envisage pour la coopération avec une contre-pièce en dent (68) dudit élément de serrage du frein (9).

10. Frein à disque (1) selon la revendication 9, **caractérisé en ce que** ladite contre-pièce en dent (68) constitue un composant séparé pour le fixage audit au moins un élément de serrage du frein (9).

11. Frein à disque (1) selon la revendication 9 ou 10, **caractérisé en ce qu'**un point de roulement, auquel il y a un mouvement roulant sans glissement de ladite partie en dent (67) avec ladite contre-pièce en dent (68), est choisi de façon, qu'il s'élève à un tiers environ de la déflection tangentielle maximale de ladite garniture de freinage (3).

12. Frein à disque (1) selon une quelconque des revendications précédentes, **caractérisé en ce que** ledit élément d'épaulement (60) est muni des parties (61, 63) pour la transmission de l'effort de serrage du frein pour la coopération avec ledit au moins un cylindre de serrage du frein (11) et ledit moyen d'appui (5) de ladite garniture de freinage (3).

13. Frein à disque (1) selon une quelconque des revendications précédentes, **caractérisé en ce que** ledit élément d'épaulement (60) est muni d'un étranglement pour la formation d'une faible élasticité de ladite surface de roulement (5a) relativement à ladite surface de roulement (6b).

14. Frein à disque (1) selon une quelconque des revendications précédentes, **caractérisé en ce que** le frein à disque (1) comprend un moyen de rattrapage (20) pour le rattrapage de l'usure de la garniture de freinage, audit moyen de rattrapage (20) étant pourvu d'un arbre fileté ajustable (12), qui est relié fonctionnellement audit dispositif de serrage du frein pour la correction de ladite au moins une garniture de freinage (3, 3'), en étant apte à être accouplé audit actionneur à moteur électrique (30) pour l'entraînement, ainsi qu'un piston de rattrapage (23b), qui est hydrauliquement ajustable dans ledit cylindre de prise de force tangentiel (21) au cas de correction de ladite au moins une garniture de freinage (3, 3').

15. Frein à disque (1) selon une quelconque des revendications précédentes, **caractérisé en ce que** ladite unité de commande (27) est reliée audit circuit de stockage (46) et à un circuit intermédiaire (47), audit actionneur à moteur électrique (30) étant relié, par une soupape d'entrée (39), audit circuit de stockage (46) et étant apte à être relié via une soupape de commutation (39) en une première position (a) audit circuit intermédiaire (47).

16. Frein à disque (1) selon la revendication 15, **caractérisé en ce que** quand ladite soupape de commutation (38) se trouve dans sa première position, un changement en serrage du frein est réalisable seulement par ajustement dudit actionneur à moteur électrique (30).

17. Frein à disque (1) selon la revendication 15 ou 16, **caractérisé en ce que** ladite unité de commande (27), qui coopère avec un piston étagé d'entrée (22) dudit cylindre de prise de force tangentiel (21), est configure pour la sélection d'un angle de coin efficace, qui est le plus proche à un coefficient de friction actuel de ladite garniture de freinage (3, 3').

18. Frein à disque (1) selon la revendication 17, **caractérisé en ce que** ladite unité de commande (27) renferme un disc perforé ou un disc de commande rotatif moyennant un servomoteur hydraulique (28) pour la connexion sélective des chambres de compression (24, 25, 26), qui se trouvent en communication avec ledit piston étagé d'entrée (22) dudit cylindre de prise de force tangentiels (21), audit circuit de stockage (46) et/ou ledit circuit intermédiaire (47).

19. Frein à disque (1) selon la revendication 18, **caractérisé en ce qu'**on peut commuter la connexion selective desdites chambres de compression (24, 25, 26) audit circuit de stockage (46) et/ou audit circuit intermédiaire (47) en correspondance avec le principe opérationnel d'un codage binaire en sept échelons, avec une surface effective agrandie de piston dudit piston étagé d'entrée (22).

20. Frein à disque (1) selon la revendication 18 ou 19, **caractérisé en ce que** ledit actionneur à moteur électrique (30) est apte à être relié via ladite soupape de commutation (38) en sa deuxième position (b) audit servomoteur hydraulique (28) de ladite unité de commande (27) afin de commuter les connexions sélectives pour la selection d'un angle de coin plus faible ou un angle de coin plus prononcé.

21. Frein à disque (1) selon la revendication 20, **caractérisé en ce qu'**au cours d'une opération de commutation de ladite soupape de commutation (38) en position (b), un conduit d'aspiration de pompe (47) dudit actionneur à moteur électrique (30) est bloqué avec un conduit de pression de pompe (51) de telle façon, qu'au cours du court cycle de commutation de ladite unité de commande (27) un changement de la position de serrage du frein ne soit pas possible.

22. Frein à disque (1) selon la revendication 20 ou 21, **caractérisé en ce que** malgré une pression différentielle régnant audit actionneur à moteur électrique (30), le moteur dudit actionneur peut être commute en un état hors courant par commutation de ladite soupape de commutation (38) de sa première position (a) en sa deuxième position (b), afin d'économiser l'énergie au cas de serrage de frein uniforme prolongé.

23. Frein à disque (1) selon une quelconque des revendications 18 à 22, **caractérisé en ce que** ladite unité de commande (27) est munie des position de commutation additionnelles, de façon qu'il y ait une position de blocage entre chacune desdites connexions sélectives ou chacune des angles de coins commutables possible, dans lequel lesdites chambres de compression (24, 25, 26) et connexions audit circuit de stockage (46) et/ou audit circuit intermédiaire (47) soient isolées et donc la position actuelle de serrage de frein ne puisse pas être change.

24. Frein à disque (1) selon une quelconque des revendications 20 à 23, **caractérisé en ce que** ledit actionneur à moteur électrique (30) est relié fonctionnellement seulement audit servomoteur (28) de ladite unité de commande (27) au cours de toute la durée d'un cycle de freinage.

25. Frein à disque (1) selon la revendication 23 ou 24, **caractérisé en ce que** ledit disque perforé ou disque de commande se trouve en une position de blocage au course de toute la durée de la position constant de serrage de frein, qui se trouve entre un angle de coin plus supercritique, relativement à l'angle de coin actuel, et un angle de coin subcritique, relativement à l'angle de coin actuel, et **en ce que** ledit actionneur à moteur électrique (30) est hors courant en cette position.

26. Frein à disque (1) selon la revendication 24 ou 25, **caractérisé en ce que** quand un serrage de frein un peut plus fort moyennant ledit actionneur à moteur électrique (30) et ledit servomoteur (28) est souhaité, ledit disque perforé ou disque de commande est ajustable d'une telle manière, que ce disque perforé ou disque de commande soit lentement ajusté à partir de la position de blocage vers la position d'un angle de coin supercritique de la façon d'une soupape proportionnelle.

27. Frein à disque (1) selon la revendication 24 or 25, **caractérisé en ce que** quand un serrage de frein un peut plus faible moyennant ledit actionneur à moteur électrique (30) et ledit servomoteur (28) est souhaité, ledit disque perforé ou disque de commande est ajustable d'une telle manière, que ce disque perforé ou disque de commande soit lentement ajusté à partir de la position de blocage vers la position d'un angle de coin subcritique de la façon d'une soupape proportionnelle.

28. Frein à disque (1) selon une quelconque des revendications précédentes, **caractérisé en ce que** ledit système hydraulique à l'intérieur du système de freinage comprend une soupape de desserrage (37) à passage sans courant pour le desserrage instantané et fiable du frein, pour le but de desserrage du frein rapide, p. ex. au cas d'un défaut ou en cas de manqué d'alimentation du frein en énergie.
